(19)

Europäisches
Patentamt
European
Patent Office
Office européen
des brevets

(11) **EP 4 450 198 A1**

(12) **EUROPEAN PATENT APPLICATION**
published in accordance with Art. 153(4) EPC

(43) Date of publication:
 **23.10.2024 Bulletin 2024/43**

(21) Application number: **22922165.0**

(22) Date of filing: **20.12.2022**

(51) International Patent Classification (IPC):
 *B23K 9/04* (2006.01)   *B23K 9/032* (2006.01)
 *B23K 9/14* (2006.01)   *B23K 31/00* (2006.01)
 *B33Y 10/00* (2015.01)   *B33Y 30/00* (2015.01)
 *B33Y 50/00* (2015.01)

(52) Cooperative Patent Classification (CPC):
 **B23K 9/032; B23K 9/04; B23K 9/095; B23K 9/14;
 B23K 31/00; B33Y 10/00; B33Y 30/00;
 B33Y 50/00; B33Y 50/02**

(86) International application number:
 **PCT/JP2022/046977**

(87) International publication number:
 **WO 2023/140015 (27.07.2023 Gazette 2023/30)**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **KH MA MD TN**

(30) Priority: **19.01.2022 JP 2022006772
 26.09.2022 JP 2022152600**

(71) Applicant: **KABUSHIKI KAISHA KOBE SEIKO SHO
 (KOBE STEEL, LTD.)
 Hyogo 651-8585 (JP)**

(72) Inventors:
 • **HUANG, Shuo
  Kobe-shi, Hyogo 651-2271 (JP)**
 • **YOSHIKAWA, Akinori
  Kobe-shi, Hyogo 651-2271 (JP)**

(74) Representative: **Müller-Boré & Partner
 Patentanwälte PartG mbB
 Friedenheimer Brücke 21
 80639 München (DE)**

(54) **LAMINATE MOLDED OBJECT MANUFACTURING METHOD AND MANUFACTURING DEVICE,
 CONTROL SUPPORT DEVICE, AND PROGRAM**

(57)   A manufacturing method of an additively manufactured object includes: a process of setting an observation model obtained based on measurement information collected from at least one or more measurement instruments provided in the building device and a state transition model indicating a state transition of a shape index of the additively manufactured object extracted from the trajectory plan; a process of extracting an observation physical quantity of the shape index from the observation model and extracting a state physical quantity of the shape index from the state transition model; a process of obtaining a state transition estimation value of the shape index by integrating the observation physical quantity and the state physical quantity; and a process of updating a formation condition of a welding bead according to the state transition estimation value.

EP 4 450 198 A1

## FIG. 6

**Description**

TECHNICAL FIELD

The present invention relates to a manufacturing method and a manufacturing apparatus of an additively manufactured object, a control assistance device, and a program.

BACKGROUND ART

In recent years, there has been an increasing need for manufacturing a component by additive manufacturing using a 3D printer, and research and development have been advanced toward practical use of building using a metal material. In a 3D printer in which a metal material is additively manufactured, for example, by melting and solidifying a metal powder or a metal wire using a laser or a heat source such as an arc and depositing a welding metal (welding bead), an additively manufactured object having a desired shape is produced. However, in additive manufacturing using a metal material, material properties such as metal structure and hardness are likely to change according to manufacturing conditions, and there is a possibility that the properties of the metal material constituting the additively manufactured object significantly change from unexpected properties. Therefore, in order to monitor the material properties of the additively manufactured object, there has been known an additively manufacturing device that measures a height of an additively manufactured object formed on a workpiece at a measurement position, and controls a processing condition for newly depositing a welding metal according to the height at the measurement position (Patent Literature 1).

CITATION LIST

PATENT LITERATURE

Patent Literature 1: Japanese Patent No. 6576593

SUMMARY OF INVENTION

TECHNICAL PROBLEM

In the case of additive manufacturing in which welding beads are deposited by using a welding torch, the welding torch is set to various postures during building, and welding beads are often formed from various directions, and thus advanced management of a bead shape is required. According to Patent Literature 1, it is possible to contribute to improvement of a shape accuracy of the welding bead by controlling processing conditions according to the measured height.
However, in a configuration in which a measurement instrument is mounted on the welding torch, an obstacle present around the torch becomes a measurement failure depending on the postures of the welding torch, a welding direction, and the like at the time of additive manufacturing, the measurement by the measurement instrument cannot be performed, or a reliability of measurement data may decrease even if the measurement is performed.
From the viewpoint of maintaining a quality of the manufactured object and controlling the device during additive manufacturing, it is desirable to constantly manage a shape index such as a deposit height. In order to manage the height, for example, a laser sensor can be used, but when a component having a complex shape or a component including a plurality of objects is built, height management for each part is necessary and processing is complicated. Furthermore, when some disturbances (for example, occurrence of device abnormality, intermittent building, and the like) occur during additive manufacturing, a building shape may be locally deviated from a predicted shape. In this case, it is required to complement the deviation of the shape.
Therefore, it is an object of the present invention to provide a manufacturing method and a manufacturing apparatus of an additively manufactured object, a control assistance device, and a program which are capable of manufacturing a highly accurate additively manufactured object by integrating a measurement result obtained from a measurement instrument and a state transition extracted from a trajectory plan, obtaining a shape index with higher accuracy, and updating the trajectory plan or repeatedly depositing welding beads while constantly managing the shape index.

SOLUTION TO PROBLEM

The present invention has the following configuration.

(1) A manufacturing method of an additively manufactured object in which a welding bead formed by melting and solidifying a filler metal by a building device is repeatedly deposited based on a predetermined trajectory plan, the method including:

a process of setting an observation model obtained based on measurement information collected from at least one or more measurement instruments provided in the building device and a state transition model indicating a state transition of a shape index of the additively manufactured object extracted from the trajectory plan;
a process of extracting an observation physical quantity of the shape index from the observation model and extracting a state physical quantity of the shape index from the state transition model;
a process of obtaining a state transition estimation value of the shape index by integrating the observation physical quantity and the state physical quantity; and
a process of updating a formation condition of the welding bead determined by the trajectory plan according to the state transition estimation value.

(2) A manufacturing apparatus of an additively manufactured object in which a welding bead formed by melting and solidifying a filler metal is repeatedly deposited based on a predetermined trajectory plan, the apparatus including:

a model setting unit configured to set an observation model obtained based on measurement information collected from at least one or more measurement instruments and a state transition model indicating a state transition of a shape index of the additively manufactured object extracted from the trajectory plan;
a physical quantity extraction unit configured to extract an observation physical quantity of the shape index from the observation model and extract a state physical quantity of the shape index from the state transition model;
an integration processing unit configured to obtain a state transition estimation value of the shape index by integrating the observation physical quantity and the state physical quantity; and
a control condition update unit configured to update a formation condition of the welding bead determined by the trajectory plan according to the state transition estimation value.

(3) A control assistance device that assists control of the manufacturing apparatus of an additively manufactured object according to (2), in which

the observation model includes point cloud data that is collected from a sensor measuring a shape index of the additively manufactured object, and that represents the measured shape index of the additively manufactured object,
the state transition model includes plan shape data representing the shape index of the additively manufactured object based on the trajectory plan,
the control assistance device includes:

a data acquisition unit configured to acquire the point cloud data from the observation model and acquire the plan shape data from the state transition model;
an arithmetic unit configured to divide the acquired point cloud data into a plurality of unit sections, divide the acquired plan shape data into regions corresponding to the unit sections, and calculate a difference value between the point cloud data and the plan shape data for each of the unit sections;
an extraction unit configured to extract a unit section in which the difference value is larger than a predetermined threshold value from the plurality of unit sections; and
an information output unit configured to output information on the extracted unit section and the difference value corresponding to the unit section.

(4) A program causing a computer to execute a manufacturing procedure of an additively manufactured object in which a welding bead formed by melting and solidifying a filler metal by a building device is repeatedly deposited based on a predetermined trajectory plan, the program causing the computer to implement:

a function of setting an observation model obtained based on measurement information collected from at least one or more measurement instruments provided in the building device and a state transition model indicating a state transition of a shape index of the additively manufactured object extracted from the trajectory plan;
a function of extracting an observation physical quantity of the shape index from the observation model and extracting a state physical quantity of the shape index from the state transition model;
a function of obtaining a state transition estimation value of the shape index by integrating the observation physical quantity and the state physical quantity; and
a function of updating a formation condition of the welding bead determined by the trajectory plan according to the state transition estimation value.

(5) A program causing a computer to execute a manufacturing procedure of an additively manufactured object in which a welding bead formed by melting and solidifying a filler metal by a building device is repeatedly deposited based on a predetermined trajectory plan, the program causing the computer to implement:

a function of setting an observation model including point cloud data that is collected from a sensor measuring a shape index of the additively manufactured object, and that represents the measured shape index of the additively manufactured object and a state transition model including plan shape data representing the shape index of the additively manufactured object based on the trajectory plan and indicating a state transition of the shape index;

a function of acquiring the point cloud data from the observation model and acquiring the plan shape data from the state transition model;

a function of dividing the acquired point cloud data into a plurality of unit sections, dividing the plan shape data into regions corresponding to the unit sections, and calculating a difference value between the point cloud data and the plan shape data for each of the unit sections; and

a function of outputting information on the calculated unit section and the difference value corresponding to the unit section.

ADVANTAGEOUS EFFECTS OF INVENTION

According to the present invention, it is possible to manufacture a highly accurate additively manufactured object by integrating a measurement result obtained from the measurement instrument and the state transition extracted from the trajectory plan, obtaining a shape index with higher accuracy, and updating the trajectory plan, or repeatedly depositing the welding beads while constantly managing the shape index.

BRIEF DESCRIPTION OF DRAWINGS

FIG. 1 is a schematic overall configuration diagram of a building device.
FIG. 2 is a schematic block diagram of a control unit.
FIG. 3 is a schematic diagram illustrating a welding torch, a laser sensor, and a camera.
FIG. 4 is a captured image obtained by capturing an image of a molten pool formed at a tip end of a filler metal with a camera.
FIG. 5 is a diagram illustrating an example of a trajectory of the welding torch when a welding bead is formed.
FIG. 6 is a flowchart illustrating a procedure of estimating a shape index based on measurement information from a plurality of measurement instruments and updating a trajectory plan, which is executed by a control unit.
FIG. 7 is a diagram illustrating contents of model setting and integration processing.
FIG. 8A is a diagram illustrating a relation between an advancing direction of the welding torch and an arrangement direction of the measurement instrument to the welding torch, and is a schematic diagram when the advancing direction and the arrangement direction coincide with each other.
FIG. 8B is a diagram illustrating a relation between the advancing direction of the welding torch and the arrangement direction of the measurement instrument to the welding torch, and is a schematic diagram when the advancing direction and the arrangement direction intersect with each other.
FIG. 9 is a diagram schematically illustrating a change in bead height of the welding bead.
FIG. 10A is a diagram illustrating a case in which the welding torch performs a weaving operation, and is a diagram illustrating a trajectory when an oscillation cycle of the weaving is long.
FIG. 10B is a diagram illustrating a case in which the welding torch performs a weaving operation, and is a diagram illustrating a trajectory when the oscillation cycle is short.
FIG. 11 is a flowchart illustrating a procedure of correcting a deviation of a building shape from a design shape by feedback-controlling a deposit height.
FIG. 12 is a schematic diagram illustrating a state in which a deviation amount between a height measurement result and a planned height is mapped.
FIG. 13 is a diagram illustrating a transition of the deposit height of welding beads according to control of the deposit height for each layer.
FIG. 14 is a schematic configuration diagram illustrating a building system in which a welding robot of the building device illustrated in FIG. 1 is mounted on a slider device and an additively manufactured object is manufactured using a positioner device.

FIG. 15 is a schematic diagram illustrating a state in which an outer peripheral surface of a bead layer is schematically developed into a flat surface.

FIG. 16 is a diagram illustrating height information of the outer peripheral surface of the bead layer and a processing result thereof.

FIG. 17 is a block diagram of a control assistance device.

FIG. 18 is a diagram illustrating a state of building a wall body.

FIG. 19A is a graph illustrating a height distribution from a set horizontal surface, which is a height measurement result.

FIG. 19B is a graph illustrating a height distribution from a set horizontal surface, which is a height measurement result.

FIG. 19C is a graph illustrating a height distribution from a set horizontal surface, which is a height measurement result.

FIG. 20A is a graph illustrating a setting value of a travel speed for feedback-controlling the deposit height.

FIG. 20B is a graph illustrating a setting value of a travel speed for feedback-controlling the deposit height.

FIG. 20C is a graph illustrating a setting value of a travel speed for feedback-controlling the deposit height.

FIG. 21 is a graph illustrating a height distribution from a set horizontal surface, which is a height measurement result for each layer.

FIG. 22 is a graph illustrating a change in standard deviation of height measurement values at a plurality of portions in a layer, which is a height measurement result for each layer.

DESCRIPTION OF EMBODIMENTS

Hereinafter, a configuration example of the present invention will be described in detail with reference to the drawings.

<Configuration of Building Device>

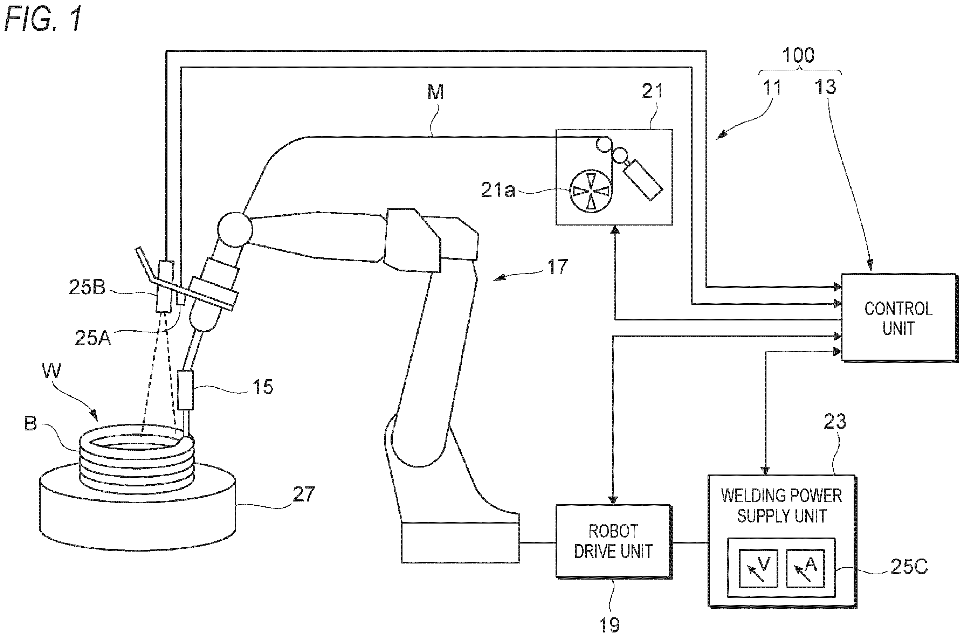

FIG. 1 is a schematic overall configuration diagram of a manufacturing apparatus 100 of an additively manufactured object.

The manufacturing apparatus 100 of an additively manufactured object (hereinafter, also referred to as a building device ) includes a building unit 11 that manufactures an additively manufactured object W by depositing welding beads B, and a control unit 13 that controls each unit of the building unit 11.

The building device 100 includes a welding robot 17 having a welding torch 15 on a tip end shaft, a robot drive unit 19 that drives the welding robot 17, a filler metal supply unit 21 that supplies a filler metal (welding wire) M to the welding torch 15, and a welding power supply unit 23 that supplies a welding current and a welding voltage to the welding torch 15.

The building device 10 includes a plurality of measurement instruments. Examples of the measurement instrument include a laser sensor 25A and a camera 25B that are provided on the tip end shaft of the welding robot 17 and have a measurement region near a tip end of the welding torch 15, and a current-voltage meter 25C that measures the welding current and the welding voltage in the welding power supply unit 23. In addition, another measurement instrument such as an encoder or a position sensor (not illustrated) that is provided in the welding robot 17 and measures a position and a moving speed of the welding torch 15 may be used. The number of measurement instruments is not limited to plural, and may be one in some cases. In the following description, the laser sensor 25A, the camera 25B, and the current-voltage meter 25C are collectively referred to as a measurement instrument 25.

The welding torch 15 is a gas metal arc welding torch that has a shield nozzle (not illustrated) and is supplied with shield gas from the shield nozzle. An arc welding method may be any one of a consumable electrode type such as coated arc welding or carbon dioxide gas arc welding, and a non-consumable electrode type such as the TIG welding or plasma arc welding, and is appropriately selected depending on the additively manufactured object W to be manufactured. For example, in the case of the consumable electrode type, a contact tip is disposed inside the shield nozzle, and a filler metal M to which a melting current is supplied is held in the contact tip. The welding torch 15 generates an arc from a tip end of the filler metal M in a shield gas atmosphere while holding the filler metal M.

The welding robot 17 is an articulated robot, and the continuously supplied filler metal M is supported at the tip end of the welding torch 15 attached to a tip end shaft of a robot arm. The position and a posture of the welding torch 15 can be set three-dimensionally and freely within a range of a degree of freedom of the robot arm according to a command from the robot drive unit 19.

The filler metal supply unit 21 includes a reel 21a around which the filler metal M is wound. The filler metal M is fed from the filler metal supply unit 21 to a feeding mechanism (not illustrated) attached to the robot arm or the like, and is fed to the welding torch 15 while being fed forward and backward by the feeding mechanism as necessary

Any commercially available welding wire can be used as the filler metal M. For example, a welding wire specified by solid wires for MAG and MIG welding of mild steel, high tensile strength steel, and low temperature service steel (JIS Z 3312), flux-cored wires for arc welding of mild steel, high tensile strength steel, and low temperature service steel (JIS Z 3313), and the like can be used. Further, it is also possible to use the filler metal M such as aluminum, an aluminum alloy, nickel, or a nickel-based alloy according to required properties.

The robot drive unit 19 drives the welding robot 17 to move the welding torch 15, and melts the continuously supplied filler metal M by an arc generated by a welding current and a welding voltage from the welding power supply unit 23.

A building program based on a trajectory plan of the additively manufactured object W to be manufactured is transmitted from the control unit 13 to the robot drive unit 19. The building program includes a large number of instruction codes and is created based on an appropriate algorithm according to various conditions such as shape data (CAD data or the like), material, and heat input amount of the additively manufactured object.

The laser sensor 25A and the camera 25B provided on the welding torch 15 or a tip end side of the robot arm move together with the welding torch 15 by the driving of the welding robot 17, and a measurement direction, a measurement range, and the like are set.

The robot drive unit 19 executes the received trajectory plan to drive each unit such as the welding robot 17, the filler metal supply unit 21, and the welding power supply unit 23, and forms the welding beads B based on the trajectory plan. That is, the robot drive unit 19 drives the welding robot 17 to move the welding torch 15 along a trajectory (bead formation trajectory) of the welding torch 15, which is set in the trajectory plan. At the same time, the robot drive unit 19 drives the filler metal supply unit 21 and the welding power supply unit 23 according to set welding conditions to melt and solidify the filler metal M at the tip end of the welding torch 15 by the arc. Accordingly, the welding beads B are formed on a base plate 27 along the trajectory of the welding torch 15. The welding beads B are adjacent to each other to form a welding bead layer, and a next welding bead layer is deposited on the welding bead layer, whereby an additively manufactured object W having a desired three-dimensional shape is built.

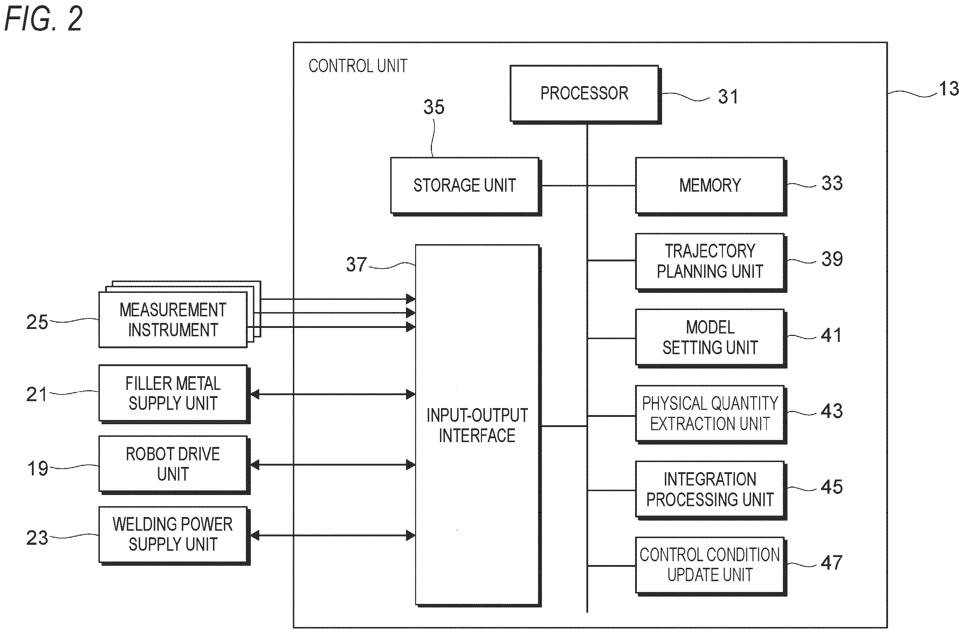

FIG. 2 is a schematic block diagram of the control unit 13.

The control unit 13 is a computer device including a processor 31 such as a CPU and an MPU, a memory 33 such as a ROM and a RAM, a storage unit 35 having a storage such as a solid state drive (SSD) and a hard disk, and an input-output interface 37. A plurality of measurement instruments 25, the filler metal supply unit 21, the robot drive unit 19, and the welding power supply unit 23 described above are connected to the input-output interface 37. The control unit 13 includes a trajectory planning unit 39, a model setting unit 41, a physical quantity extraction unit 43, an integration processing unit 45, and a control condition update unit 47, which will be described later in detail.

The trajectory planning unit 39 creates a building program of the additively manufactured object W to be manufactured. That is, when data of a material, a shape, and welding conditions of the additively manufactured object W to be manufactured is input to the trajectory planning unit 39, the trajectory planning unit 39 first divides a shape model of the additively manufactured object W for each height of a predetermined welding bead according to the input data, and determines a bead formation procedure such as a bead formation order and welding conditions of the welding beads such that the obtained layers are filled with the welding bead. The bead formation procedure is used as a building program. There are various algorithms for determining the above-described trajectory plan, and the determining method is not limited. The created building program is stored in the storage unit 35, and is output to the robot drive unit 19 when there is an output request from the robot drive unit 19.

The trajectory planning unit 39, the model setting unit 41, the physical quantity extraction unit 43, the integration processing unit 45, and the control condition update unit 47 of the control unit 13 may be provided in another computer device disposed separately from the building unit 11. In this case, the computer device may be connected to the building device 100 from a remote location via a communication means such as a network.

<Measurement Instrument>

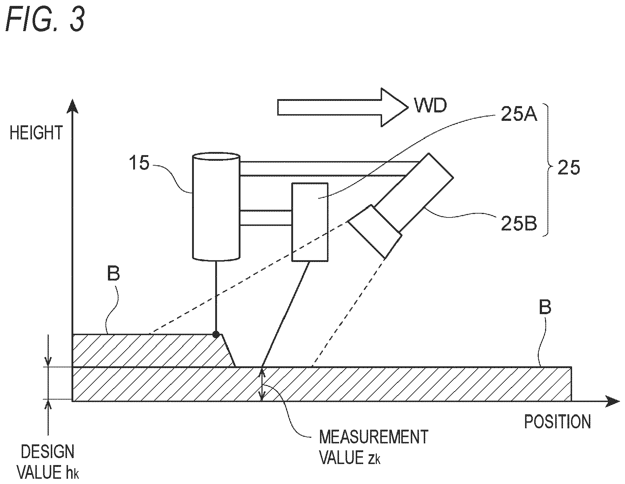

FIG.3 is a schematic diagram illustrating the welding torch 15, the laser sensor 25A, and the camera 25B.

The laser sensor 25A can use a commercially available laser displacement sensor or the like, and acquires a reflected light of an emitted laser light as height data. Accordingly, the laser sensor 25A can measure a shape of an existing welding bead B and a base shape before a bead is formed. The details of a measurement principle of a shape are well known, and thus will be omitted.

The camera 25B is an image-capturing device for three-dimensional shape measurement, and can measure the shape of the welding bead B and the base shape based on a captured image similar to the laser sensor 25A.

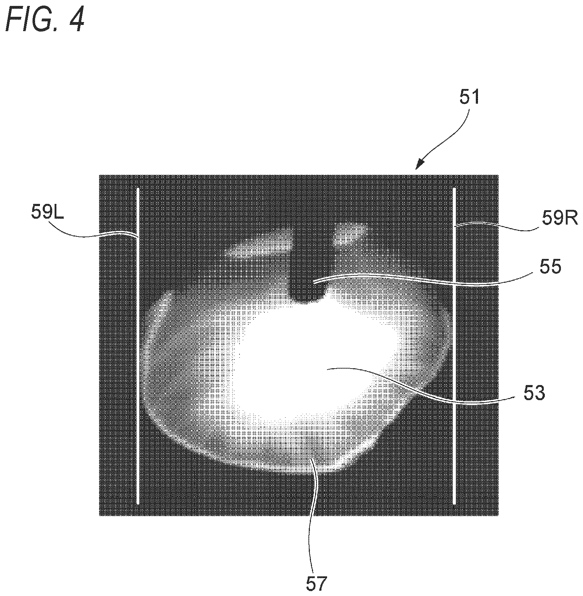

FIG. 4 is a captured image obtained by capturing an image of a molten pool formed at the tip end of the filler metal M with the camera 25B.

The image 51 captured by the camera 25B includes an arc center 53, a filler metal tip end 55, a molten pool tip end 57, and a molten pool left end and a molten pool right end (indicated by lines 59L and 59R in FIG.4), and a position and a shape of each unit can be extracted by an appropriate image processing. For example, information on a width and a shape of the arc, and a position and a shape of the molten pool can be extracted. The camera 25B may be a camera for capturing an image of a state of forming a bead in a molten pool or the like, or a camera for temperature measurement such as thermography.

By providing the plurality of measurement instruments 25 in this way, it is possible to detect a state with higher accuracy as compared with a case in which only a single measurement instrument is used.

A problem in a case in which a welding bead is formed while measuring various states using the laser sensor 25A, the camera 25B, and the current-voltage meter 25C will be described.

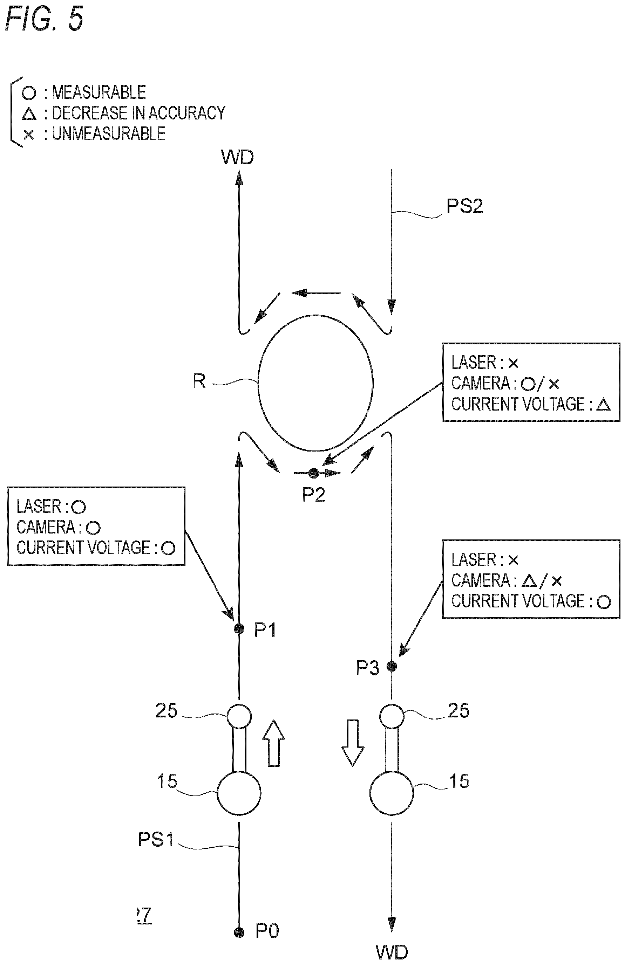

FIG. 5 is a diagram illustrating an example of the trajectory of the welding torch 15 when the welding bead B is formed.

A trajectory PS1 illustrated in FIG.5 is a trajectory in which the welding torch 15 advances from a position P0 on the base plate 27 toward an obstacle R such as a standing wall portion, passes through a position P1, then bends the trajectory at a position of the obstacle R, and returns to the position P0 after passing through a position P3. A case in which a welding bead is formed along the trajectory PS1 is considered.

When the welding torch 15 is moved along the trajectory PS1, the measurement instrument 25 is disposed on a forward side in a movement direction of the welding torch 15 in a forward path on a left side and a return path on a right side in FIG. 5.

At the position P1 between the position P0 and the obstacle R, measurement by the laser sensor 25A, the camera 25B, and the current-voltage meter 25C can be performed without any trouble. That is, the laser sensor 25A and camera 25B can satisfactorily measure the base shape before a welding bead is formed. In addition, the current-voltage meter 25C can favorably measure a welding current and a welding voltage of the welding bead being formed.

However, at a position P2 after an advancing direction is curved from the obstacle R, when a positional relation between the laser sensor 25A and the camera 25B, and the welding torch 15 is maintained as it is, the forward side in the movement direction is out of the measurement range of the laser sensor 25A. Therefore, a shape of the welding torch 15 on the forward side in the movement direction cannot be measured by the laser sensor 25A. In addition, the camera 25B can measure a region in which the forward side in the movement direction is within an image-capturing range, and cannot measure a region in which the forward side in the movement direction is outside the image-capturing range. In addition, the welding current and the welding voltage are likely to generate noise as a welding direction changes, and a measurement accuracy decreases. Even if orientations of the laser sensor 25A and the camera 25B in the measurement direction are adjusted, the trajectory PS1 cannot completely follow geometrically, and a situation in which the measurement cannot be performed or a situation in which the measurement accuracy decreases is unavoidable.

The position P3 on the way of a return path from the obstacle R to the position P0, the laser sensor 25A and the camera 25B are disposed on a rearward side in the movement direction of the welding torch 15. Therefore, a shape of the laser sensor 25A on the forward side in the movement direction cannot be measured. In addition, in the camera 25B, the region outside the image-capturing range is increased, and the measurement accuracy decreases or the measurement cannot be performed.

The above-described result is similarly applied to a trajectory PS2 on an opposite side (upper side in FIG.5) of the obstacle R, and the measurement by each measurement instrument 25 may be less likely to be performed according to a movement position of the welding torch 15. In addition, in additive manufacturing, the welding torch 15 may be set in various postures, and the welding bead may be formed from various directions during building, and thus advanced management and control of measurement are required. The measured information is then used to correct the trajectory plan for forming a welding bead, and thus an accuracy of the measurement information is required.

Therefore, in order to manufacture an additively manufactured object with high accuracy, it is necessary to constantly obtain stable and highly accurate measurement information even when the measurement instrument is less likely to perform measurement as described above. When a measurement method by a single measurement instrument is difficult, or when the measurement method is not used, it is necessary to complement the measurement information by measurement of another measurement instrument. At this time, as will be described in detail later, a shape index is estimated by using a predetermined prediction method using an observation model including shape indexes (various physical quantities representing a bead shape or the like) measured by each measurement instrument and a state transition model including shape indexes (physical quantities such as a design value) extracted from a predetermined trajectory plan. By correcting the trajectory plan according to an obtained state transition estimation value, it is possible to manufacture an additively manufactured object having a shape closer to a design shape. The procedure of estimating the shape index and correcting the trajectory plan may be incorporated in the above-described drive program, or a separate program may be prepared and executed by the control unit 13, which is the computer device.

<Estimation of Shape Index>

Next, the procedure of estimating the above-described shape index will be described.

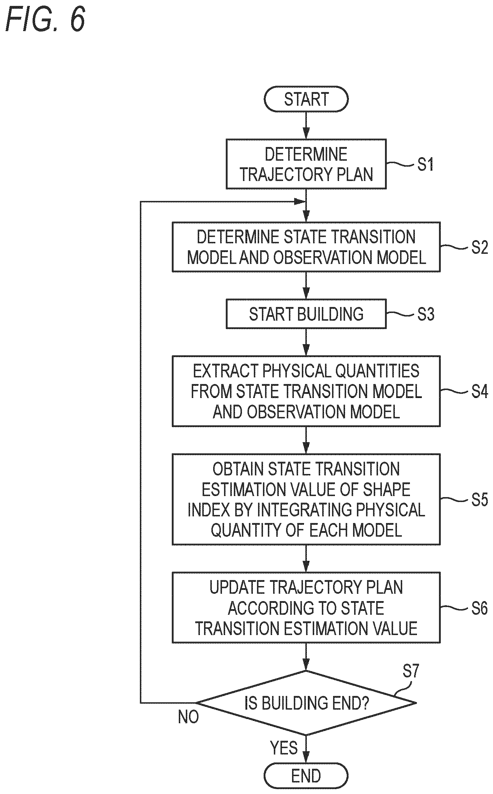

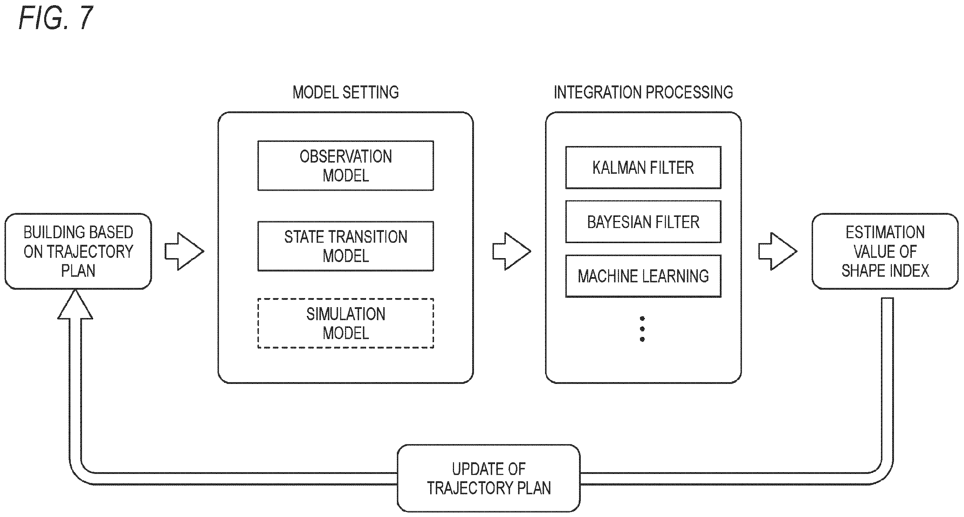

FIG. 6 is a flowchart illustrating a procedure of estimating a shape index based on the measurement information from the plurality of measurement instruments 25 and updating the trajectory plan, which is executed by the control unit 13. In addition, FIG. 7 is a diagram illustrating contents of model setting and integration processing. First, outlines of the following procedures (1) to (4) will be described in order with reference to FIGS. 6 and 7.

(1) Build based on Trajectory Plan

The control unit 13 determines a trajectory plan for building an additively manufactured object to be manufactured (S1). Specifically, a drive program based on the trajectory plan is selected.

(2) Model Setting

Next, the model setting unit 41 (FIG. 2) of the control unit 13 sets a model corresponding to the determined trajectory plan (drive program) and a device configuration of the building unit 11 (S2). The model is an observation model set based on the measurement information collected from the plurality of measurement instruments 25 provided in the building device 100 and a state transition model set based on information on a state transition of a shape index of the additively manufactured object, which is extracted from the trajectory plan. Furthermore, the measurement instrument 25 may include a simulation model that is set by obtaining information that is less likely to be directly measured through simulation.

In the observation model, a model corresponding to each measurement target by the laser sensor 25A, the camera 25B, and the current-voltage meter 25C illustrated in FIG. 1 is set. In addition, a model using an encoder, a position sensor, a thermo camera, and the like of the welding robot 17 may be set.

In the observation model, shape indexes of the welding bead B to be formed, for example, parameters such as a base surface height, a bead height, a bead width, a bead profile, and a weld cross-sectional area before a bead is deposited, and parameters such as an arc center, an arc width, an arc shape, a filler metal tip end position, and an end position of the molten pool obtained from the captured image of the molten pool (those parameters are also referred to as observation physical quantities) are created based on measurement information obtained in time series from the plurality of measurement instruments 25.

The state transition model is a model created based on information included in the trajectory plan, and the shape index is associated with a time point (timing), a position, or formation conditions of a welding bead. The trajectory plan includes parameters such as a trajectory of the welding torch 15, a torch movement speed (travel speed), a torch tip end position (target position), a torch posture, a welding current, a welding voltage, a filler metal supply speed, the number of trajectories (paths), a length of the path, and an interval between the paths as formation conditions of the welding bead, and shape indexes (also referred to as state physical quantities) such as a planned bead height, a planned bead width, and a planned weld amount of the welding bead. Based on the information on these trajectory plans, it is possible to obtain a transition of a relation between various shape indexes and formation conditions of the welding bead at a specific position or at a specific timing after the start of building, and a model is created using information on the obtained transition.

The simulation model is a model that is created by analytically obtaining information that is less likely to be directly measured by the measurement instrument, for example, parameters (also referred to as analysis physical quantities) such as an overlapping amount of beads and a temperature of a molten pool (molten metal) during building. Specifically, a calculation such as a thermoelastic analysis and a thermoelastic-plastic analysis is performed based on the trajectory plan, physical properties of a bead material, a temperature during building, and the like, and the parameters that are less likely to be directly measured are predicted. By using the simulation model, it is expected to improve an estimation accuracy of the shape index to be described later. In the simulation, commercially available software having a function of reproducing a state of the additively manufactured object, such as heat transfer analysis or deformation analysis, may be used.

After each model is set, the control unit 13 starts additive manufacturing by executing a building program and driving each unit of the building unit 11 (S3). When the additive manufacturing is started, measurement information from each measurement instrument 25 is input to the control unit 13. The measurement information is sent to the physical quantity extraction unit 43 (FIG. 2).

(3) Integration Processing

The physical quantity extraction unit 43 of the control unit 13 extracts an observation physical quantity from the observation model and a state physical quantity from the state transition model (S4). Then, as illustrated in FIG.7, the integration processing unit 45 obtains a state transition estimation value of the shape index by performing the integration processing to be described later in detail on the extracted observation physical quantity and state physical quantity (S5). At this time, the analysis physical quantity according to the simulation model can also be integrated. As a method of estimating a shape index by calculating and integrating physical quantities from each model, a well-known method such as a Kalman Filter, a Bayesian filter, and machine learning is used.

In general, the Kalman Filter is a method of estimating more accurate information using a plurality of pieces of uncertain information, and a Kalman gain is used to control which of the plurality of pieces of information is given importance.

The Bayesian filter is a method based on the Bayes' theorem, and calculates a conditional probability and a probability derived from a multiplication theorem. When a certain result is observed based on a prior probability, a probability of the cause of the prior probability is known, and thus the state transition estimation value can be derived.

The machine learning is a method of finding the rules from the state transition model and the observation model to predict a future (calculating the state transition estimation value), and for example, a learning model may be configured using an input as a parameter of the observation model and a parameter of the state transition model, and an output as a shape index.

The obtained state transition estimation values of the shape index are values of a welding bead height, a welding bead width, a welding current, a welding voltage, and the like, and are substitute values of measurement values by the laser sensor, the camera, and the current-voltage meter illustrated in FIG.5.

(4) Update of Trajectory Plan

The control condition update unit 47 of the control unit 13 confirms a difference between the obtained state transition estimation value of the shape index and a design shape and a design condition according to the trajectory plan, and if the difference is equal to or larger than a predetermined threshold value, the formation conditions of the welding bead are updated. For example, a building program being executed or a building program scheduled to be executed next time is changed. In this way, the trajectory plan is updated so that the additively manufactured object has a planned design shape and design condition (S6). The above-described processes in steps S2 to S6 are repeated until the building is completed (S7).

In this way, by forming the welding bead based on the updated trajectory plan, the deviation from the design shape can be reduced, and the additively manufactured object can be manufactured with high accuracy.

<Specific Content of Integration Processing>

Next, a process of integrating the shape index of the additively manufactured object using observation models from the plurality of measurement instruments and the state transition model based on the trajectory plan will be described. The shape index includes, for example, a bead height, a bead width, and welding conditions of the welding bead.

The outline of the integration processing is as follows.

First, a shape index h of the additively manufactured object to be manufactured is determined, and a trajectory plan based on the determined shape index h is created. Then, the welding bead B is formed by the building device 100 based on the created trajectory plan. In a process of forming the welding bead B, the shape index of the welding bead B is measured by the measurement instrument 25 to set an observation model. On the other hand, the state transition model is set based on the shape index extracted from the trajectory plan. Then, the observation model and the state transition model are associated with each other by using the predetermined prediction method, and an actual shape index (such as an actual shape of the welding bead and performed welding conditions) is estimated. The trajectory plan is updated according to the estimated shape index so that there is no deviation from an original trajectory plan. In this way, the welding bead B is formed based on the updated trajectory plan. By repeatedly narrowing a width of a normal distribution of a shape error (deviation) in time series, for example, the welding bead B can be made closer to a designed bead height.

Next, the integration processing will be described more specifically.

In the state transition model, a shape index $h_k$ at a certain time point k during the building of a deposited object is represented by Equation (1).

$$h_{k+1} = h_k + V_k \qquad (1)$$

According to Equation (1), a shape index $h_{k+1}$ at a next time point k + 1 is obtained by adding a noise component $V_k$ of the state transition model to the shape index $h_k$ at the time point k. A well-known error model may be applied to the noise component $V_k$.

On the other hand, in the observation model, the shape index $h_k$ at the certain time point k is represented by Equation (2).

$$z_k = h_k + W_k \quad (2)$$

$Z_k$ is a measurement value obtained from the measurement instrument 25. According to Equation (2), a noise component $W_k$ of the observation model is added to the measurement value $z_k$ at the certain time point k. A well-known error model may be applied to the noise component $W_k$. The observation models are distinguished from each other for each measurement instrument, for example, an observation model using a measurement result ($z_{k, L}$) of the bead width made by the laser sensor 25A is represented by Equation (3), and an observation model using a measurement result ($z_{k, C}$) of the bead width made by the camera 25B is represented by Equation (4).

$$z_{k, L} = h_k + W_{k, L} \quad (3)$$

$$z_{k, c} = h_k + W_{k, c} \quad (4)$$

Here, $W_{k, L}$ is a noise component of the laser sensor 25A, and $W_{k, c}$ is a noise component of the camera 25B.
As described above, the predicted shape indexes are obtained from the plurality of observation models (measurement instruments 25), and it is necessary to summarize the plurality of shape indexes. Therefore, the plurality of independent observation models are integrated. The state transition model needs to be summarized, but an integration procedure thereof can be basically the same as an integration procedure of the observation model to be described below.
When the plurality of observation models are integrated, a case in which each observation model is linear will be described as an example. A constant determined by an observation means i is represented by $C_i$. The letter "i" is a subscript indicating the identification of the observation means, and thus constants corresponding to n observation means can be represented by $C_1$, $C_2$, $C_3$, $C_n$ (i = 1 to n). In addition, each observation means performs independent observation.
A relation between an observation value $z_i$ and a desired shape index h can be represented by Equation (5).

$$z_i = C_i h + W_i \quad (5)$$

Here, $W_i$ is a noise component of the observation means i and is, for example, an error based on a normal distribution (variance of $W_i$: $\sigma_i^2$).
When there is no error in one observation model and the observation model is reversible, the shape index h is directly obtained by one observation means. However, if not, it is possible to perform estimation from the plurality of observation models as follows.
In order to obtain the state transition estimation value of the shape index, from those represented by a linear combination of observation values $z_1$, $z_2$, $z_n$ obtained by each measurement means, a composite value $h_{Est}$ that satisfies coefficient constraint conditions and has a minimum variance is obtained. That is, in $h_{Est} = \Sigma a_i z_i$, a weighting coefficient $a_i$ that satisfies constraint conditions of Equation (6) and has a minimum variance $V[h_{Est}] = \Sigma_i a_i^2 C_i^2$ of the composite value $h_{Est}$ is obtained.

$$E[h_{Est}] = \Sigma_i a_i C_i h = h \quad (6)$$

At this time, the weighting coefficient $a_i$ can be represented by Equation (7).

$$a_i = C_i^2 \sigma_i^{-2}/(\Sigma_j C_j^2 \sigma_j^{-2}) \quad (7)$$

When all the models to be integrated are linear, they can be solved by using a well-known method as a constrained least square problem. When all the models to be integrated are non-linear, they can be solved in the same manner as in the case of the linear models by performing, for example, Taylor expansion and linear approximation on the models.
Other than constraint conditions of Equation (7), other constraint conditions may be separately imposed. For example, a magnitude relation of the weighting coefficient $a_i$ may be determined based on a bead formation direction and a formation position of the welding bead, or a rod movement motion, a rod movement posture, and the like of the welding torch 15.

As an example, based on a relation between the measurement range of the measurement instrument (the laser sensor 25A and the camera 25B) 25 and the trajectory of the welding torch 15, for a location at which the measurement instrument 25 becomes unmeasurable, the weighting coefficient $a_i$ is set to zero (a; = 0), and for a location at which a measurement accuracy decreases, the weighting coefficient $a_i$ at a current measurement location is set to be sufficiently smaller than a previous measurement location ($a_{i, k} << a_{i, k-1}$).

By setting such constraint conditions in advance for each target position of the bead formation, it is possible to prompt the update of the model earlier than the update of the model according to the observation result.

Next, specific constraint conditions of the weighting coefficient $a_i$ will be described.

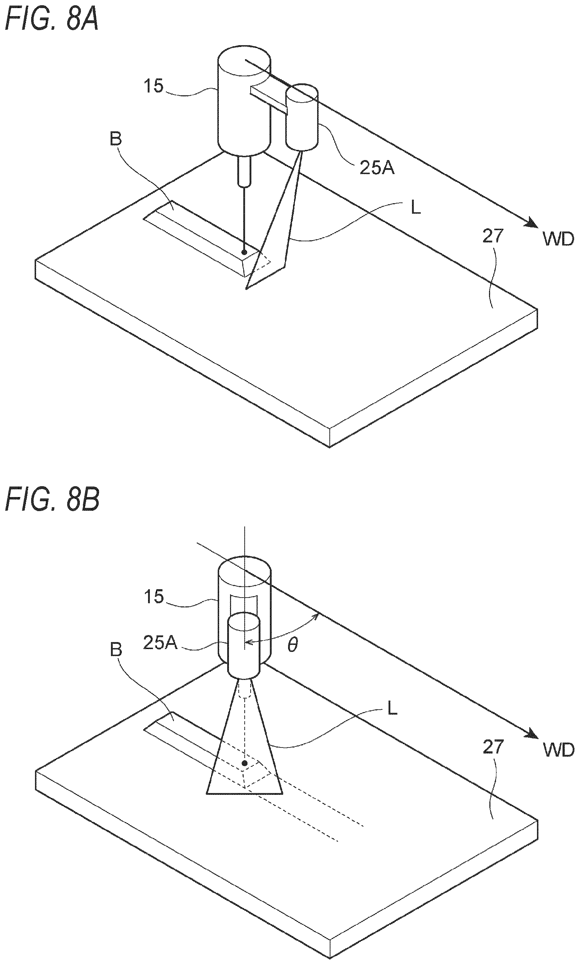

FIGS.8A and 8B are diagrams illustrating a relation between an advancing direction WD of the welding torch 15 and an arrangement direction of the measurement instrument (the laser sensor 25A is exemplified) 25 to the welding torch 15. FIG. 8A is a schematic diagram when the advancing direction WD and the arrangement direction coincide with each other. FIG. 8B is a schematic diagram when the advancing direction WD and the arrangement direction intersect with each other.

The welding torch 15 takes various postures depending on restrictions such as obstacles around the torch and a torch trajectory. The arrangement direction of the laser sensor 25A provided in the welding torch 15 may be inclined by an angle $\theta$ from the advancing direction WD as illustrated in FIG. 8B, in addition to being disposed in front of the advancing direction WD illustrated in FIG. 8A depending on a bead formation state. However, in the case illustrated in FIG. 8B, the measurement range of the laser sensor 25A does not include the entire base on which a bead is formed. Therefore, in the case illustrated in FIG. 8B, there is a high possibility that the measurement accuracy decreases, and thus the weighting coefficient $a_i$ is made smaller than in the case illustrated in FIG. 8A.

As described above, the weighting coefficient $a_i$ of the observation model is decreased as the angle $\theta$ formed by the advancing direction WD and the arrangement direction of the measurement instrument 25 increases.

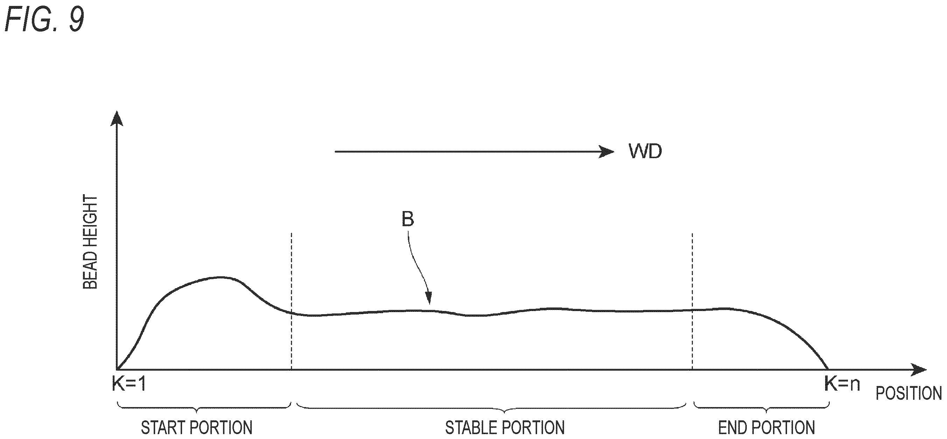

FIG. 9 is a diagram schematically illustrating a change in bead height of the welding bead B.

When the welding bead B is formed, an arc changes between a start portion and an end portion of the bead formation, and thus a bead height tends to change as compared with a stable portion between the start portion and the end portion. The bead height at the start portion is larger than that at the stable portion, and the bead height at the end portion is smaller than that at the stable portion. Therefore, measurement values at the start portion and the end portion of the bead formation are likely to become unstable, and thus the weighting coefficient $a_i$ is made smaller than that of the stable portion.

In this way, shapes of the welding bead B at the start portion and the end portion are not steady like the stable portion, but even if such a curved change in shape occurs, a model that conforms to an actual bead shape of welding bead B can be set by appropriately adjusting the weighting coefficient $a_i$. In addition, a region in which the welding bead B is formed in a straight line shape and a region in which the welding bead B is formed in a curved shape can be distinguished from each other, and the weighting coefficient $a_i$ can be appropriately set to be different for the regions.

Further, as the state transition model, a model in which the bead shape transitions steadily, and a model in which the bead shape changes in a curved manner can be combined on the same trajectory (the same path). For example, bead heights at a start part and an end part of a bead transition in a curved manner, and a bead form in which a portion other than the start part and the end part transitions steadily (constant height) is exemplified. Accordingly, it is possible to make modeling close to a shape of an actually formed welding bead and to perform more accurate control according to a tendency of state transition.

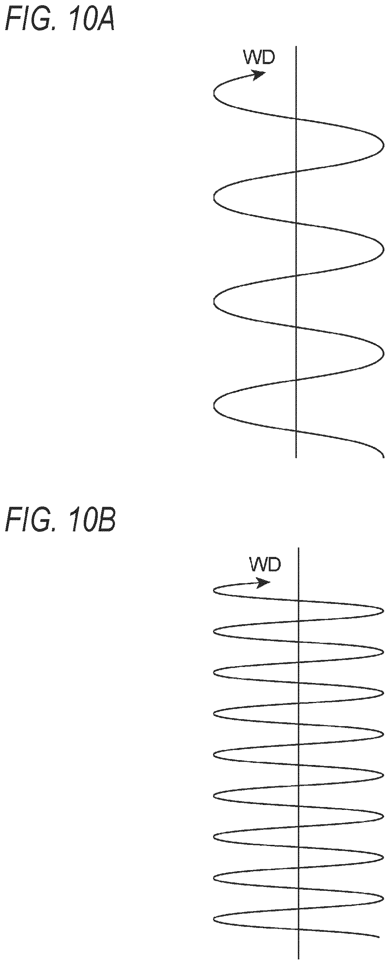

FIGS. 10A and 10B are diagrams illustrating a case in which the welding torch 15 performs a weaving operation. FIG. 10A is a diagram illustrating a trajectory when an oscillation cycle of the weaving is long. FIG. 10B is a diagram illustrating a trajectory when the oscillation cycle is short.

As an oscillation cycle of the rod movement motion of the welding torch 15 becomes shorter, noise is likely to enter the measurement of the welding current and the welding voltage. Therefore, the measurement tends to become unstable as the oscillation cycle of the weaving operation becomes shorter, and thus the weighting coefficient $a_i$ is decreased.

As described above, when an error factor occurs in the measurement by the measurement instrument 25, the weighting coefficient $a_i$ for the measurement result is decreased, whereby the estimation of the shape index is not greatly affected. Accordingly, the estimation accuracy can be improved.

The weighting coefficient $a_i$ may be set with the variance $\sigma_i^2$ of the noise of each model as a reference (initial value). For example, when the measurement instruments are two (observation values: $z_1$, $z_2$), a function of the observation model is $C_1 = C_2 = 1$, and when no constraint condition other than Equation (6) is provided, the state transition estimation value $h_{Est}$ of the shape index can be represented by Equation (8). Here, $\sigma_1^2$ represents a variance of a measurement instrument of i = 1, and $\sigma_2^2$ represents a variance of a measurement instrument of i = 2.

[Formula 1]

$$h_{Est} = \frac{\sigma_1^{-2}}{\sigma_1^{-2}+\sigma_2^{-2}} z_1 + \frac{\sigma_2^{-2}}{\sigma_1^{-2}+\sigma_2^{-2}} z_2 \quad \cdot\cdot\cdot (8)$$

The weighting coefficient $a_i$ set with the variance $\sigma_i^2$ of the noise as a reference may be set as the initial value, and the weighting coefficient $a_i$ may be sequentially adjusted in accordance with the progress of the building. When the variance $\sigma_i^2$ of the noise is used as described above, the variance $\sigma_i^2$ can be reflected in the setting of integration conditions in consideration of the characteristics unique to each measurement instrument 25 and the state transition model.

Based on the observation model and the state transition model, information on the state transition estimation value $h_{Est}$ of the shape index is sequentially updated ($h_{Est, k} \rightarrow h_{Est, k+1} \rightarrow h_{Est, k+2} \rightarrow$ ). For example, when the state transition estimation value of the shape index is updated using the Kalman Filter based on the update ($z_{i, k} \rightarrow z_{i, k+1} \rightarrow z_{i, k+2} \rightarrow$ ) of the result measured by the measurement instrument 25, Equation (9) can be referred to.

$$h_{Est, k+1} = h_{Est, k} + K_{k+1}\{z_{i, k+1} - C_i(h_{Est, k})\} \qquad (9)$$

Here, $K_k$ is a Kalman gain.

In Equation (9), the state transition estimation value of the shape index is updated based on an amount obtained by adjusting a difference between an actual observation value and a predicted observation value by the Kalman gain. The state transition estimation value $h_{Est, k}$ output once is stored as information included in the trajectory plan, and by using the stored state transition estimation value every time the state transition estimation value is updated, it is possible to constantly grasp a latest state transition estimation value and the transition of the state transition estimation value during building. The storage unit 35 may be used to store the state transition estimation value.

The control condition update unit 47 illustrated in FIG. 2 performs shape control of the additively manufactured object based on the state transition estimation value $h_{Est}$ of the shape index obtained by performing the integration processing as described above. Accordingly, when the state transition estimation value and the design value are compared with each other and the formation conditions of the welding bead are adjusted according to a difference thereof, it is possible to perform building while correcting the design value in real time. In addition, a trajectory plan may be updated to change, add, or delete a trajectory (also referred to as a path), and a corresponding control command (drive program) may be generated. When a difference between the state transition estimation value and the design value is large, the formation conditions of the bead may be greatly changed and the control may become unstable, and thus design values of a target height, a target width, a target weld volume, and the like of the welding bead may be changed. As a specific method, the difference between the state transition estimation value and the design value is compared with a predetermined threshold value, and when the difference exceeds the threshold value, the design value may be corrected.

As a combination model, it is preferred to use a state transition model derived from a trajectory plan and an observation model based on the measurement information of the measurement instrument 25. In additive manufacturing, it is often difficult to measure all the required measurement ranges for convenience of the measurement instrument 25. Therefore, by combining the observation model and the state transition model, it is possible to constantly and accurately estimate the shape index such as the bead height of the welding bead, which may be less likely to be stably measured.

<Complementary Processing for Shape Deviation Occurred during Additive Manufacturing>

From the viewpoint of a quality of the manufactured object and the device control during additive manufacturing, it is desirable to manage a shape index such as a building height. When a building shape is locally deviated from a design shape during additive manufacturing, a processing of complementing the shape deviation is necessary. Therefore, the shape index is measured during additive manufacturing, and the formation conditions of the welding bead are updated according to a deviation amount between the measured shape index and the design shape, thereby feedback-controlling the shape index. Accordingly, a building shape from a next layer is corrected so as to approach the design shape. Such a procedure of correcting a building shape will be described below. Here, the deposit height (bead height) will be described as an example of the shape index, and another index such as a bead width may be used.

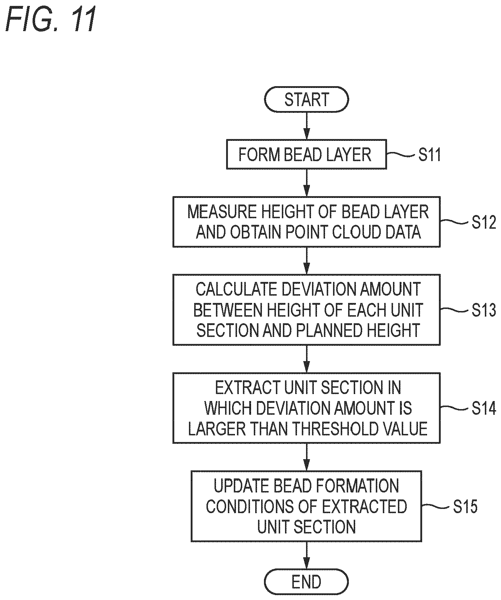

FIG. 11 is a flowchart illustrating a procedure of correcting the deviation of the building shape from the design shape by feedback-controlling the deposit height.

First, a drive program based on the set trajectory plan is read from the building device 100 illustrated in FIG. 1, and the welding robot 17 or the like is driven according to the drive program to deposit the welding beads B (S11). For each bead layer formed by the build, the deposit height of the manufactured object is scanned and measured by the laser sensor 25A. Then, information on a height distribution of the bead layer collected by the measurement is acquired as point cloud data (S12). The scanning of the laser sensor 25A may be performed simultaneously with the formation of the welding bead B by the driving of the welding robot 17, and it is preferred to perform scanning after the welding bead B is formed. That is, it is preferred to measure a shape of the manufactured object based on a trajectory created separately from the trajectory (path) for forming the welding bead B. The point cloud data is height information of a large number of measurement points measured by the laser sensor 25A at any sampling interval.

When a drive cycle for driving the welding robot 17 is different from a measurement cycle of the laser sensor 25A, it is preferred to interpolate the driving of the welding robot 17 in accordance with a measurement timing of the laser sensor 25A.

Next, a planned height (deposit planning data) corresponding to each measurement position of the point cloud data obtained by measuring a height of the bead layer is obtained based on the trajectory plan. Then, a difference between a measured height (actual height) at each measurement position and the planned height (hereinafter, also referred to as a deviation amount) is calculated by using information on the point cloud data (observation model) and the planned height (state transition model) (S13). The measured height at each measurement position is an average value of heights of a unit section (for example, a certain range of a rectangular shape, a polygonal shape, a circular or elliptical shape) in a height measurement surface of the bead layer. A size of the unit section is any size. As an example, a square having a side of 5 mm in which a height measurement surface is divided into a grid shape is defined as a unit section, and an average value of heights in the unit section is defined as a height of a representative point, which is a center of the square, and represented as point cloud data. The unit section is preferably divided along the formation direction of the welding bead.

The height information output from the laser sensor 25A is output in a coordinate system of the laser sensor 25A, and it is preferred to convert the output height information into a robot coordinate system of the welding robot 17. In addition, when a positioner device and a slider device to be described later are provided, it is desirable to convert an operation coordinate system of each device into the robot coordinate system of the welding robot 17 and to unify the robot coordinate system into any one coordinate system. Accordingly, the tendency of each piece of information can be easily grasped.

For the planned height, the deposit planning data is divided into a plurality of regions corresponding to the unit sections, and the average value of the planned heights in each region, that is, in each unit section, is obtained for each unit section.

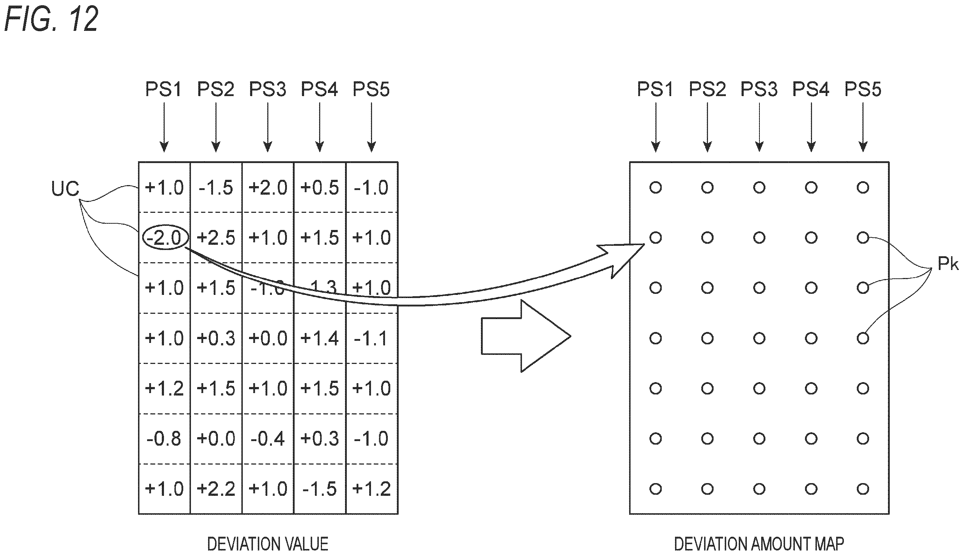

FIG. 12 is a schematic diagram illustrating a state in which a deviation amount between a height measurement result and a planned height is mapped. After the bead layer is built by a plurality of paths (for example, buses PS1 to PS5), the height distribution of the bead layer is measured. An average value in a region of a unit section UC is obtained based on a measurement result of the height distribution. In addition, the planned height obtained based on the trajectory plan for each measurement position is obtained, and similarly, the average value of the planned heights is obtained for each unit section.

Then, a deviation amount between an average value of measured heights of each unit section UC and an average value of planned heights of each unit section UC is calculated. A deviation amount map in which a deviation amount is registered for each representative point Pk is created using a center position of each square, which is the unit section UC, as the representative point Pk. By dividing the unit section UC for each path at equal intervals along each path, height control to be described later can be performed for each path using a division length of each path as a unit.

By comparing the average values as described above, the deviation amount is less likely to be affected by measurement noise and fine unevenness of a bead surface. Therefore, the shape can be stably corrected based on a rough tendency in the unit section UC.

Next, the unit section UC having a deviation amount larger than a predetermined threshold value is extracted from the obtained deviation amount map (S14). For a region of the bead layer corresponding to the extracted unit section UC, the formation conditions (information included in the trajectory plan) of a next welding bead to be deposited are updated (S15). In this way, the trajectory plan is selectively updated and the shape is adjusted for the unit section UC having a large deviation amount, and thus the control can be limited only to a portion at which height control is required, and the control itself can be stably maintained.

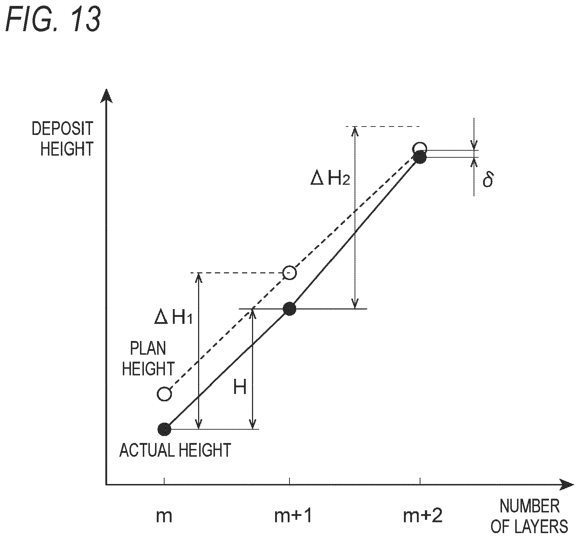

FIG. 13 is a diagram illustrating a transition of the deposit height of the welding beads according to the control of the deposit height for each layer. For example, when a measured height (actual height) of an m-th (m is an integer) bead layer is smaller than the planned height, a target height of a next layer ((m + 1)th layer) may be set to be larger than a planned height of the next layer. However, when a difference between the actual height and the planned height exceeds a predetermined limit value, the planned height may not be reached even if the target height is adjusted for only one layer of the next layer. In this case, the target height may be adjusted over a plurality of layers to be formed later.

That is, in the (m + 1)th layer, the target height is set to a height obtained by increasing $\Delta H1$ from the actual height, and the building is performed, and in a (m + 2)th layer, a target height is set to a height obtained by further increasing $\Delta H2$ from the actual height of the (m + 1)th layer. Accordingly, the actual height on the m + 2 layer surface is likely to reach the planned height, and a difference $\delta$ between the actual height and the planned height can be significantly reduced. A procedure of feedback-controlling the deposit height shown here is an example, and is not limited thereto.

<Specific Example of Complementary Processing>

Next, a control example in which a deposit height is measured as a shape index of a welding bead and a deposit height of a next layer is feedback-controlled according to a difference (deviation amount) between a measurement result and a planned height will be described.

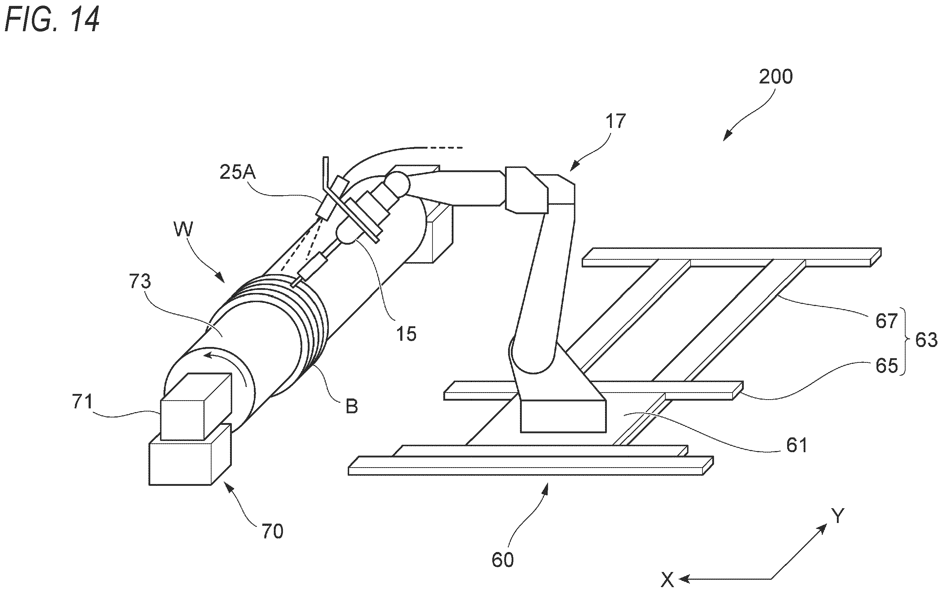

FIG. 14 is a schematic configuration diagram illustrating a building system 200 in which the welding robot 17 of the building device 100 illustrated in FIG. 1 is mounted on the slider device 60 and the additively manufactured object W is manufactured using the positioner device 70. The building system 200 includes the building device 100 illustrated in FIG. 1.

The slider device 60 includes a movement table 61 on which the welding robot 17 is placed, and a horizontal movement mechanism 63 that moves the movement table 61 along an XY plane that is a horizontal surface. The horizontal movement mechanism 63 includes an X-axis rail 65 and a Y-axis rail 67, and the movement table 61 is moved in an X-axis direction and a Y-axis direction by a drive source such as a motor (not illustrated).

The positioner device 70 includes a base 71 and a cylindrical rotating body 73 having both end shafts supported by the base 71. The rotating body 73 is rotationally driven about a shaft line while being supported by the base 71. A base material (not illustrated) is fixed to a surface of the rotating body 73, and a welding bead is deposited on the base material, thereby building the additively manufactured object W.

A cylindrical manufactured object is built using the building system 200 illustrated in FIG. 14, and an effect of feedback-controlling a deposit height is verified. In addition, the formation of the welding bead and the scanning by the laser sensor 25A are performed while rotating the positioner device 70. The scanning of the laser sensor 25A is performed in synchronization with the measurement timing of the laser sensor 25A itself. Therefore, measurement data serving as the measurement result includes point cloud data representing a radial distance r (height information) from a center of the rotating body 73, and information on robot coordinates (x, y, z) at a measurement position and a rotation angle ($\varphi$) of the positioner device 70.

The point cloud data of the measured height information is converted into a robot coordinate system using the robot coordinates and the information on the rotation angle of the positioner device 70, and a height distribution when a central angle of the cylindrical manufactured object is 360° is used as expanded view information. That is, a processing of synchronizing a timing of the robot driving described above with the measurement cycle of the laser sensor 25A and a processing of unifying signals of drive commands of the respective units in the robot coordinate system of the welding robot 17 are performed.

Specifically, by driving the slider device 60 and the welding robot 17 illustrated in FIG. 14, the welding torch 15 is positioned at a desired position, and the rotating body 73 of the positioner device 70 is rotationally driven while maintaining the posture of the welding torch 15 to form the welding bead B. Then, by moving the welding torch 15 in a Y direction by the driving of the welding robot 17, an annular additively manufactured object W deposited in an annular or spiral shape is obtained. In addition, the welding torch 15 or the laser sensor 25A provided in the vicinity of the torch is positioned in the same manner as described above, and an outer peripheral surface (surface of the bead layer) of the additively manufactured object W is scanned by the laser sensor 25A while rotating the rotating body 73 of the positioner device 70. Accordingly, the height distribution of the formed bead layer is obtained.

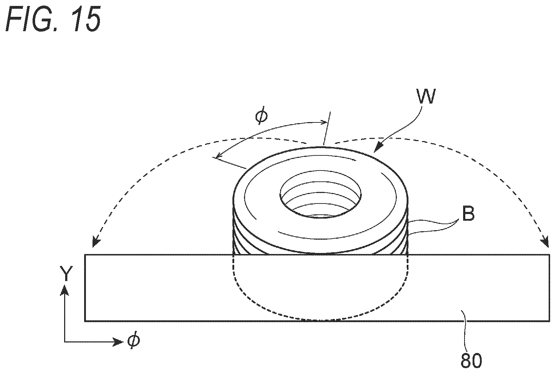

FIG. 15 is a schematic diagram illustrating a state in which an outer peripheral surface of the bead layer is schematically developed into a flat surface. In the following description, a surface shape of 360° of the outer peripheral surface of the formed bead layer will be described using expanded view information 80 obtained by converting the surface shape into a robot coordinate system.

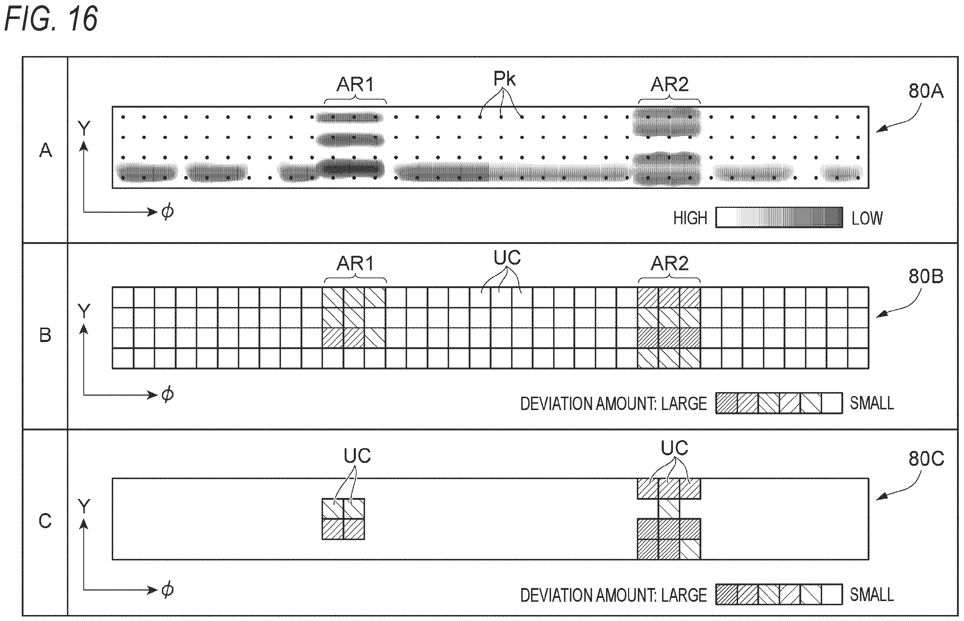

FIG. 16 is a diagram illustrating height information of the outer peripheral surface of the bead layer and a processing result thereof. expanded view information 80A indicated in A in FIG. 16 is a contour map illustrating a height distribution (point cloud data) of the outer peripheral surface of the bead layer, and a long (high) or short (low) radial distance r from a central axis of the manufactured object is represented by a high or low density. A region in which the higher the density is, the shorter the radial distance r is (the smaller the height is), and a region in which the higher the density is, the longer the radial distance r is (the larger the height is). In addition, the representative point Pk of the unit section is shown as a dot. According to A in FIG. 16, regions Ar1 and Ar2 of the expanded view information 80A have heights that are particularly smaller than those of a surrounding region.

expanded view information 80B indicated in B in FIG. 16 is a result of obtaining a deviation amount between a value Hm1 obtained by averaging the height distribution (point cloud data) indicated in A for each unit section UC centered on each representative point Pk and a value Hm2 obtained by averaging planned heights corresponding to the unit sections UC for each unit section UC, and a magnitude of the deviation amount is represented by a high or low density for each unit section UC. As indicated in B in FIG. 16, the unit section UC in which a deviation amount is smaller than the surrounding region is recognized in the regions Ar1 and Ar2.

expanded view information 80C indicated in C in FIG. 16 is a result of extracting a unit section UC having a deviation amount larger than the predetermined threshold value from the unit sections UC indicated in B in FIG. 16. As an example, a unit section UC having a deviation amount of 2 mm or more within a square unit section UC with a side of 5 mm is extracted.

In this way, it is possible to generate expanded view information in which the unit section UC having a relatively large deviation from the planned height is visualized, display the expanded view information on a display unit such as a monitor, or output the expanded view information as output data to be appropriately processed by another computer. Accordingly, an operator can visually and easily grasp a portion at which a deviation between a display content of the monitor and the planned height is large. In addition, a portion having a larger height deviation amount can be easily specified by the other computer. Therefore, it is possible to selectively extract a portion having a large deviation from the planned height in one path of the trajectory plan of the additively manufactured object W. Then, the trajectory plan of the extracted region can be locally changed, and fine height correction can be easily performed.

When the control operation will be described with reference to the block diagram of the control unit 13 illustrated in FIG. 2, first, the trajectory planning unit 39 selects a drive program to be additively manufactured. The model setting unit 41 sets the laser sensor 25A as the observation model, and sets formation conditions of a welding bead according to the selected drive program as the state transition model. The physical quantity extraction unit 43 extracts output data (point cloud data) from the laser sensor 25A, and extracts the above-described planned height from the state transition model. The integration processing unit 45 obtains the deviation amount from the point cloud data and the information on the planned height as the state transition estimation value of the shape index. Further, the unit section UC having a larger deviation amount is extracted. The control condition update unit 47 updates the formation conditions of the welding bead based on the deviation amount of the unit section extracted by the integration processing unit 45. The deviation amount is a state transition estimation value, and at the same time, the deviation amount is an index in consideration of a difference from a design shape and design conditions based on the trajectory plan. Then, the trajectory planning unit 39 generates a drive program based on the updated trajectory plan. In this way, by executing the updated drive program to form a next bead layer, the deviation from the planned height can be reduced.

The above-described control operation may be performed by a control assistance device that externally controls the control unit 13. In this case, the control assistance device 300 acquires a trajectory plan, point cloud data representing a shape, and information on a planned shape or the like from the control unit 13, and in particular, outputs a result of obtaining a region having a large deviation from a plan (the extracted unit section and a difference value of the unit section) to the control unit 13. Accordingly, the control unit 13 can update the formation conditions of the welding bead at a position corresponding to the extracted unit section.

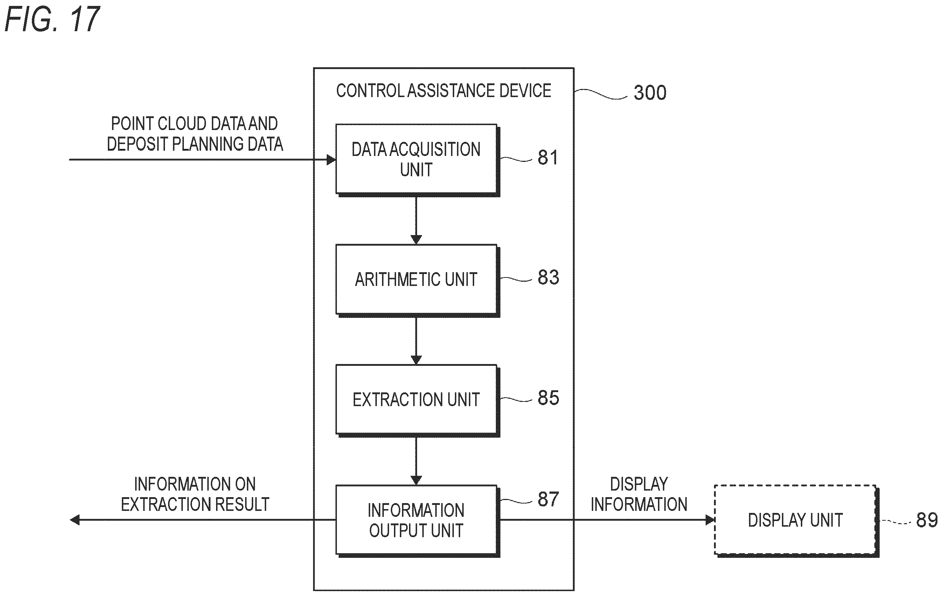

FIG. 17 is a block diagram of the control assistance device 300. The control assistance device 300 includes a data acquisition unit 81, an arithmetic unit 83, an extraction unit 85, and an information output unit 87, and may further include a display unit 89.

The control assistance device 300 assists the control of the building device 100 described above. The observation model set by the control unit 13 (FIGS. 1 and 2) includes point cloud data that is collected from a sensor measuring a shape index of the additively manufactured object, and that represents the measured shape index of the additively manufactured object. That is, the observation model includes the point cloud data of the height information measured by the laser sensor 25A. In addition, the state transition model includes plan shape data representing a shape index of the additively manufactured object based on the trajectory plan. The plan shape data is data including the shape index planned by the trajectory plan. That is, the state transition model includes, for example, information on the planned height of the welding bead.

The data acquisition unit 81 acquires point cloud data from the observation model and acquires deposit planning data from the state transition model.

The arithmetic unit 83 divides the acquired point cloud data into a plurality of unit sections, divides the acquired deposit planning data into regions corresponding to the unit sections, and calculates a difference value between the point cloud data and the deposit planning data for each unit section. The difference value may be a deviation value obtained by averaging values in the unit section.

The extraction unit 85 extracts a unit section having a difference value larger than a predetermined threshold value from the plurality of unit sections. In addition, the information output unit 87 outputs information on the extracted unit section and the difference value corresponding to the unit section.

When the output information of the information output unit 87 is input to the control unit 13 of the building device 100, the control unit 13 updates the formation conditions of the welding bead according to the output information. When the output information is input to the display unit 89 such as a monitor, the display unit 89 displays the output information, whereby the operator can clearly grasp a region in which a deposited actual shape index differs greatly from a plan shape, that is, a portion to be corrected and controlled.

Next, in order to verify the effect of feedback-controlling a height, a result of depositing a single row of welding beads to build a wall body will be described.

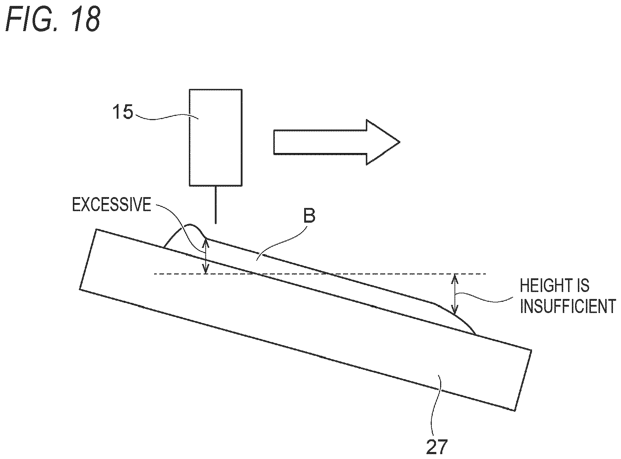

FIG. 18 is a diagram illustrating a state of building the wall body. In order to simulate a height abnormality of the wall body, the building is started from a state in which the manufactured object including a base metal (base plate 27) is inclined. In addition, the start part and end part of the welding bead B are not subject to control because a local height variation occurs.

First, in a state in which the base metal is inclined from the horizontal surface, a first layer of welding bead B is formed without feedback-controlling the deposit height. In second and subsequent layers, a change in height is observed by feedback-controlling the deposit height. A total of ten welding beads B are deposited in the building of the wall body. In the feedback control of the deposit height, a travel speed is increased in a region in which a height is excessive, and the travel speed is decreased in a region in which a height is insufficient.

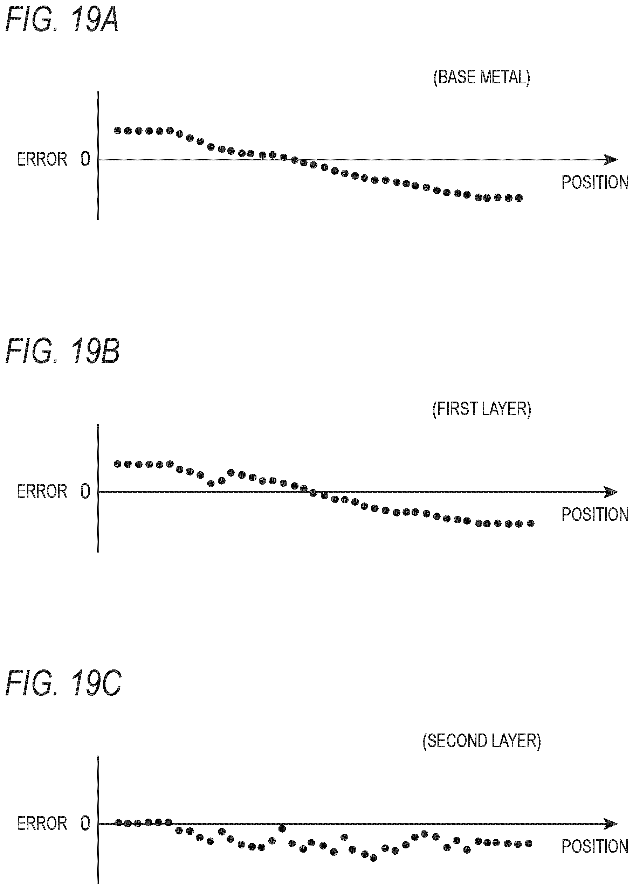

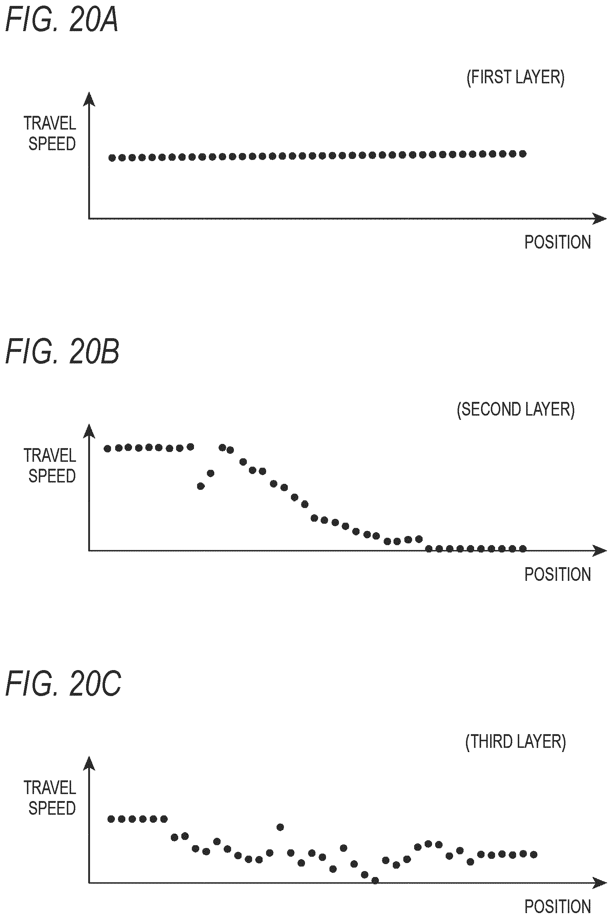

FIGS. 19A to 19C are graphs illustrating a height distribution from a set horizontal surface, which is a height measurement result. FIGS. 20A to 20C are graphs illustrating a setting value of a travel speed for feedback-controlling the deposit height.

FIG. 19A illustrates the height distribution of a surface of the base metal inclined from the horizontal surface. FIG. 19B illustrates a height distribution of a first layer of welding bead formed on the surface of the base metal. The first layer has substantially the same inclination as a height distribution of the base metal since the height is not feedback-controlled as illustrated in FIG. 20A. FIG. 19C illustrates a height distribution of a second layer of welding bead. In the second layer, as illustrated in FIG. 20B, a feedback control for increasing a travel speed in the region in which the height is excessive and decreasing the travel speed in the region in which the height is insufficient is performed, and thus the inclination is relaxed and flattened as compared with the first layer. When the height distribution of the second layer of welding bead is substantially horizontal, as illustrated in FIG. 20C, by feedback-controlling a deposit height of a third layer, a travel speed is controlled to increase or decrease so as to flat fine unevenness.

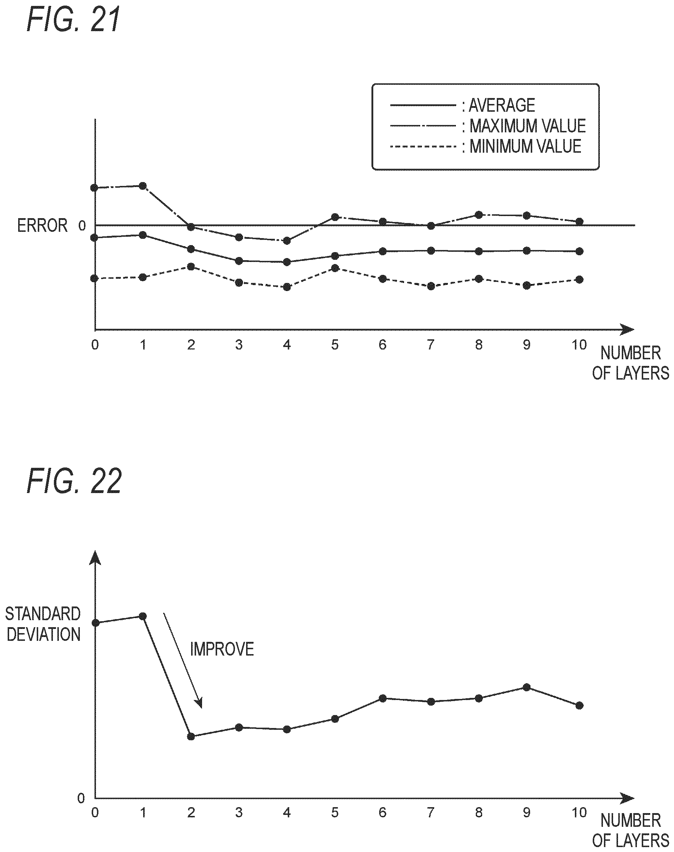

FIG. 21 is a graph illustrating a height distribution from the set horizontal surface, which is a height measurement result for each layer. A width from a maximum value to a minimum value of the deposit height is relatively large in a zeroth layer and the first layer in which the deposit height is not feedback-controlled, and is relatively small in the second and subsequent layers in which the deposit height is feedback-controlled.

FIG. 22 is a graph illustrating a change in standard deviation of height measurement values at a plurality of portions in a layer, which is a height measurement result for each layer. The standard deviation is relatively large in the zeroth layer and the first layer in which the deposit height is not feedback-controlled, and the standard deviation is significantly decreased in the second and subsequent layers in which the deposit height is feedback-controlled.

From the above, it is demonstrated that the deposit height of the manufactured object can be flattened by feedback-controlling the deposit height during the forming of the welding bead.

The present invention is not limited to the above-described embodiments, and combinations of the respective configurations of the embodiments and changes and applications made by those skilled in the art based on the description of the specification and well-known techniques are also intended for the present invention and are included in the scope of protection.

As described above, the following matters are disclosed in the present specification.

(1) A manufacturing method of an additively manufactured object in which a welding bead formed by melting and solidifying a filler metal by a building device is repeatedly deposited based on a predetermined trajectory plan, the method including:

a process of setting an observation model obtained based on measurement information collected from at least one or more measurement instruments provided in the building device and a state transition model indicating a state transition of a shape index of the additively manufactured object extracted from the trajectory plan;
a process of extracting an observation physical quantity of the shape index from the observation model and extracting a state physical quantity of the shape index from the state transition model;
a process of obtaining a state transition estimation value of the shape index by integrating the observation physical quantity and the state physical quantity; and
a process of updating a formation condition of the welding bead determined by the trajectory plan according to the state transition estimation value.

According to the manufacturing method of an additively manufactured object, the shape index can be estimated by associating the state transition model with the observation model. Accordingly, even when there is a portion that cannot be measured or is less likely to be measured, and an accurate shape index is less likely to be estimated by only the observation model, it is possible to complement weak points of estimation performances and perform more accurate prediction by integrating the observation model and the state transition model. Accordingly, the trajectory plan can be updated based on a more accurate state transition estimation value obtained by the integration processing at any portion of the additively manufactured object, and it is possible to perform the build control of the additively manufactured object with high accuracy. In addition, by using the state transition model, the information on the trajectory plan is taken into account as compared with the case of the simple calculation of the observation model, and thus an estimation accuracy can be improved.

(2) The manufacturing method of an additively manufactured object according to (1), in which the process of updating the trajectory plan includes a process of adjusting the formation condition of the welding bead according to a difference between the shape index estimated in the process of obtaining the state transition estimation value of the shape index and the shape index planned in the trajectory plan.

According to the manufacturing method of a deposited product, the difference between the estimated shape index and the trajectory plan is reduced, and the additively manufactured object having a shape closer to the design shape can be manufactured.

(3) The manufacturing method of an additively manufactured object according to (1) or (2), in which the integration processing includes integration of an analysis physical quantity extracted from a simulation model that simulates and forms the welding bead based on the trajectory plan.

According to the manufacturing method of an additively manufactured object, the shape index can be estimated with higher accuracy by using the analysis physical quantity obtained by calculating information on an overlapping amount between the welding beads which are less likely to be directly observed by the measurement instrument, a molten pool temperature at the time of depositing, and the like through simulation.

(4) The manufacturing method of an additively manufactured object according to any one of (1) to (3), in which the integration processing linearly combines the observation physical quantity and the state physical quantity with a weighting coefficient.

According to the manufacturing method of an additively manufactured object, a model used for integration can be appropriately selected (integration ratio can be adjusted), and a robustness of the state transition estimation value can be secured.

(5) The manufacturing method of an additively manufactured object according to (4), in which an initial value of the weighting coefficient is determined according to a variance index of errors of the observation model and the state transition model.

According to the manufacturing method of an additively manufactured object, when a noise component of a measurement instrument or the like known in advance is known, an accuracy of the state transition estimation value can be improved by reflecting an error caused by the noise component.

(6) The manufacturing method of an additively manufactured object according to (4) or (5), in which the weighting coefficient is adjusted for each weld target position defined by the trajectory plan.

According to the manufacturing method of an additively manufactured object, an appropriate weighting coefficient can be determined for each portion to be built, and the variation in the state transition estimation value is minimized for each target position.

(7) The manufacturing method of an additively manufactured object according to any one of (4) to (6), in which the weighting coefficient of the observation model is adjusted according to a rod movement motion or a rod movement posture of a welding torch that forms the welding bead.

According to the manufacturing method of an additively manufactured object, the weighting coefficient can be determined according to the generation of a noise signal due to the rod movement motion or a change in a measurement environment of the measurement instrument due to the rod movement posture, and thus it is possible to estimate a stable and highly accurate shape index constantly.

(8) The manufacturing method of an additively manufactured object according to any one of (1) to (7), in which as the state transition model, a model in which a welding bead shape transitions steadily, and a model in which the welding bead shape changes in a curved manner are combined on the same bead formation trajectory.

According to the manufacturing method of an additively manufactured object, it is possible to model the shape of the actually formed welding bead in accordance with a tendency thereof. For example, it is possible to make modeling in which a linear portion and a curved portion are distinguished from each other, and to perform control according to a tendency of state transition.

(9) The manufacturing method of an additively manufactured object according to (1), in which

the observation model includes point cloud data that is collected from a sensor measuring a shape index of the additively manufactured object, and that represents the measured shape index of the additively manufactured object, the state transition model includes plan shape data representing the shape index of the additively manufactured object based on the trajectory plan,
the point cloud data is divided into a plurality of unit sections, the plan shape data is divided into regions corresponding to the unit sections, and a difference value is obtained by comparing the point cloud data with the plan shape data for each of the unit sections, and

the formation condition of the welding bead is updated according to the difference value.

According to the manufacturing method of an additively manufactured object, the formation condition of the welding bead can be updated for each unit section according to the difference value obtained by comparing the measured point cloud data with the plan shape data. Accordingly, the shape deviation from the plan is reduced, and the additively manufactured object can be manufactured with high accuracy.

(10) The manufacturing method of an additively manufactured object according to (9), in which a unit section in which the difference value is larger than a predetermined threshold value is extracted from the plurality of unit sections, and the formation condition of the welding bead is updated for a region corresponding to the extracted unit section.

According to the manufacturing method of an additively manufactured object, the formation condition of the welding bead can be updated particularly for a unit section having a large difference value, and thus the shape deviation can be efficiently reduced.

(11) The manufacturing method of an additively manufactured object according to (10), in which the difference value is a deviation amount between a value obtained by averaging the shape index included in the unit section of the point cloud data and a value obtained by averaging the shape index of the plan shape data in the region corresponding to the unit section.

According to the manufacturing method of an additively manufactured object, the difference value is less likely to be affected by measurement noise and fine unevenness of the bead surface, and the shape can be stably corrected based on a rough tendency in the unit section.

(12) The manufacturing method of an additively manufactured object according to (9), in which

the difference value is obtained for each bead layer formed by the welding bead,
when the difference value in the bead layer for which the shape index is measured is equal to or smaller than a predetermined limit value, the formation condition of the welding bead in a bead layer to be deposited next to the bead layer is updated, and
when the difference value exceeds the predetermined limit value, the formation condition of the welding bead in a plurality of bead layers to be deposited after the bead layer for which the shape index is measured is updated.

According to the manufacturing method of an additively manufactured object, even when there is a unit section having an excessive difference value, the correction is distributed to the plurality of bead layers, and thus rapid control can be prevented and the correction can be performed gently.

(13) A manufacturing apparatus of an additively manufactured object in which a welding bead formed by melting and solidifying a filler metal is repeatedly deposited based on a predetermined trajectory plan, the apparatus including:

a model setting unit configured to set an observation model obtained based on measurement information collected from at least one or more measurement instruments and a state transition model indicating a state transition of a shape index of the additively manufactured object extracted from the trajectory plan;
a physical quantity extraction unit configured to extract an observation physical quantity of the shape index from the observation model and extract a state physical quantity of the shape index from the state transition model;
an integration processing unit configured to obtain a state transition estimation value of the shape index by integrating the observation physical quantity and the state physical quantity; and
a control condition update unit configured to update a formation condition of the welding bead determined by the trajectory plan according to the state transition estimation value.

According to the additive manufacturing control device, the shape index can be estimated by associating the state transition model with the observation model. Accordingly, even when there is a portion that cannot be measured or is less likely to be measured, and an accurate shape index is less likely to be estimated by only the observation model, it is possible to complement weak points of estimation performances and perform more accurate prediction by integrating the observation model and the state transition model. Accordingly, the trajectory plan can be updated based on a more accurate state transition estimation value obtained by the integration processing at any portion of the additively manufactured object, and it is possible to perform the build control of the additively manufactured object with high accuracy. In addition, by using the state transition model, the information on the trajectory plan is taken into account as compared with the case of the simple calculation of the observation model, and thus an estimation accuracy can be improved.

(14) A control assistance device that assists control of the manufacturing apparatus of an additively manufactured object according to (13), in which

the observation model includes point cloud data that is collected from a sensor measuring a shape index of the additively manufactured object, and that represents the measured shape index of the additively manufactured object, the state transition model includes plan shape data representing the shape index of the additively manufactured object based on the trajectory plan,
the control assistance device includes:

a data acquisition unit configured to acquire the point cloud data from the observation model and acquire the plan shape data from the state transition model;
an arithmetic unit configured to divide the acquired point cloud data into a plurality of unit sections, divide the acquired plan shape data into regions corresponding to the unit sections, and calculate a difference value between the point cloud data and the plan shape data for each of the unit sections;
an extraction unit configured to extract a unit section in which the difference value is larger than a predetermined threshold value from the plurality of unit sections; and
an information output unit configured to output information on the extracted unit section and the difference value corresponding to the unit section.

According to the control assistance device, a position of the unit section in which a difference value between the measured point cloud data and the planned plan shape data is larger than the threshold value becomes clear, and it is easy to selectively control the position.

(15) The control assistance device according to (14), further including: a display unit configured to display output information from the information output unit.

According to the control assistance device, an operator can visually and easily manage a portion to be controlled by the display of the display unit.

(16) The control assistance device according to (14), in which
the arithmetic unit converts a coordinate system of the point cloud data into a drive coordinate system of the manufacturing apparatus of an additively manufactured object.

According to the control assistance device, a tendency of a height or the like is easily grasped by unifying the coordinate systems.

(17) A program causing a computer to execute a manufacturing procedure of an additively manufactured object in which a welding bead formed by melting and solidifying a filler metal by a building device is repeatedly deposited based on a predetermined trajectory plan, the program causing the computer to implement:

a function of setting an observation model obtained based on measurement information collected from at least one or more measurement instruments provided in the building device and a state transition model indicating a state transition of a shape index of the additively manufactured object extracted from the trajectory plan;
a function of extracting an observation physical quantity of the shape index from the observation model and extracting a state physical quantity of the shape index from the state transition model;
a function of obtaining a state transition estimation value of the shape index by integrating the observation physical quantity and the state physical quantity; and
a function of updating a formation condition of the welding bead determined by the trajectory plan according to the state transition estimation value.

According to the program, the shape index can be estimated by associating the state transition model with the observation model. Accordingly, even when there is a portion that cannot be measured or is less likely to be measured, and an accurate shape index is less likely to be estimated by only the observation model, it is possible to complement weak points of estimation performances and perform more accurate prediction by integrating the observation model and the state transition model. Accordingly, the trajectory plan can be updated based on a more accurate state transition estimation value obtained by the integration processing at any portion of the additively manufactured object, and it is possible to perform the build control of the additively manufactured object with high accuracy. In addition, by using the state transition model, the information on the trajectory plan is taken into account as compared with the case of the simple calculation of the observation model, and thus an estimation accuracy can be improved.

(18) A program causing a computer to execute a manufacturing procedure of an additively manufactured object in which a welding bead formed by melting and solidifying a filler metal by a building device is repeatedly deposited based on a predetermined trajectory plan, the program causing the computer to implement:

a function of setting an observation model including point cloud data that is collected from a sensor measuring a shape index of the additively manufactured object, and that represents the measured shape index of the additively manufactured object and a state transition model including plan shape data representing the shape index of the additively manufactured object based on the trajectory plan and indicating a state transition of the shape index;

a function of acquiring the point cloud data from the observation model and acquiring the plan shape data from the state transition model;

a function of dividing the acquired point cloud data into a plurality of unit sections, dividing the plan shape data into regions corresponding to the unit sections, and calculating a difference value between the point cloud data and the plan shape data for each of the unit sections; and

a function of outputting information on the calculated unit section and the difference value corresponding to the unit section.

According to the program, a position of the unit section in which a difference value between the measured point cloud data and the planned plan shape data is larger than the threshold value becomes clear, and it is easy to selectively control the position.

The present application is based on the Japan patent application (Japanese Patent Application No. 2022-006772) filed on January 19, 2022 and the Japanese patent application (Japanese Patent Application No. 2022-152600) filed on September 26, 2022.

REFERENCE SIGNS LIST

11: building unit
13: control unit
15: welding torch
17: welding robot
19: robot drive unit
21: filler metal supply unit
21a: reel
23: welding power supply unit
25: measurement instrument
25A: laser sensor
25B: camera
25C: current-voltage meter
27: base plate
31: processor
33: memory
35: storage unit
37: input-output interface
39: trajectory planning unit
41: model setting unit
43: physical quantity extraction unit
45: integration processing unit
47: control condition update unit
51: captured image
53: arc center
55: filler metal tip end
57: molten pool tip end
59L: line of left end of molten pool
59R: line of right end of molten pool
60: slider device
61: movement table
63: horizontal movement mechanism
65: X-axis rail
67: Y-axis rail
70: positioner device
71: base
73: rotating body
80, 80A, 80B, 80C: expanded view
81: data acquisition unit
83: arithmetic unit

85: extraction unit

87: information output unit

89: display unit

100: building device (manufacturing apparatus of additively manufactured object)

200: building system

300: control assistance device

B: welding bead

M: filler metal

R: obstacle

W: additively manufactured object

**Claims**

1. A manufacturing method of an additively manufactured object in which a welding bead formed by melting and solidifying a filler metal by a building device is repeatedly deposited based on a predetermined trajectory plan, the method comprising:

   a process of setting an observation model obtained based on measurement information collected from at least one or more measurement instruments provided in the building device and a state transition model indicating a state transition of a shape index of the additively manufactured object extracted from the trajectory plan;
   a process of extracting an observation physical quantity of the shape index from the observation model and extracting a state physical quantity of the shape index from the state transition model;
   a process of obtaining a state transition estimation value of the shape index by integrating the observation physical quantity and the state physical quantity; and
   a process of updating a formation condition of the welding bead determined by the trajectory plan according to the state transition estimation value.

2. The manufacturing method of an additively manufactured object according to claim 1, wherein the process of updating the trajectory plan includes a process of adjusting the formation condition of the welding bead according to a difference between the shape index estimated in the process of obtaining the state transition estimation value of the shape index and the shape index planned in the trajectory plan.

3. The manufacturing method of an additively manufactured object according to claim 1, wherein the integration processing includes integration of an analysis physical quantity extracted from a simulation model that simulates and forms the welding bead based on the trajectory plan.

4. The manufacturing method of an additively manufactured object according to claim 2, wherein the integration processing includes integration of an analysis physical quantity extracted from a simulation model that simulates and forms the welding bead based on the trajectory plan.

5. The manufacturing method of an additively manufactured object according to any one of claims 1 to 4, wherein the integration processing linearly combines the observation physical quantity and the state physical quantity with a weighting coefficient.

6. The manufacturing method of an additively manufactured object according to claim 5, wherein an initial value of the weighting coefficient is determined according to a variance index of errors of the observation model and the state transition model.

7. The manufacturing method of an additively manufactured object according to claim 5, wherein the weighting coefficient is adjusted for each weld target position defined by the trajectory plan.

8. The manufacturing method of an additively manufactured object according to claim 5, wherein the weighting coefficient of the observation model is adjusted according to a rod movement motion or a rod movement posture of a welding torch that forms the welding bead.

9. The manufacturing method of an additively manufactured object according to any one of claims 1 to 4, wherein as the state transition model, a model in which a welding bead shape transitions steadily, and a model in which the welding bead shape changes in a curved manner are combined on the same bead formation trajectory.

10. The manufacturing method of an additively manufactured object according to claim 5, wherein as the state transition model, a model in which a welding bead shape transitions steadily, and a model in which the welding bead shape changes in a curved manner are combined on the same bead formation trajectory.

11. The manufacturing method of an additively manufactured object according to claim 1, wherein:

the observation model includes point cloud data that is collected from a sensor measuring a shape index of the additively manufactured object, and that represents the measured shape index of the additively manufactured object;
the state transition model includes plan shape data representing the shape index of the additively manufactured object based on the trajectory plan;
the point cloud data is divided into a plurality of unit sections, the plan shape data is divided into regions corresponding to the unit sections, and a difference value is obtained by comparing the point cloud data with the plan shape data for each of the unit sections; and
the formation condition of the welding bead is updated according to the difference value.

12. The manufacturing method of an additively manufactured object according to claim 11, wherein a unit section in which the difference value is larger than a predetermined threshold value is extracted from the plurality of unit sections, and the formation condition of the welding bead is updated for a region corresponding to the extracted unit section.

13. The manufacturing method of an additively manufactured object according to claim 12, wherein the difference value is a deviation amount between a value obtained by averaging the shape index included in the unit section of the point cloud data and a value obtained by averaging the shape index of the plan shape data in the region corresponding to the unit section.

14. The manufacturing method of an additively manufactured object according to claim 11, wherein:

the difference value is obtained for each bead layer formed by the welding bead,
when the difference value in the bead layer for which the shape index is measured is equal to or smaller than a predetermined limit value, the formation condition of the welding bead in a bead layer to be deposited next to the bead layer is updated; and
when the difference value exceeds the predetermined limit value, the formation condition of the welding bead in a plurality of bead layers to be deposited after the bead layer for which the shape index is measured is updated.

15. A manufacturing apparatus of an additively manufactured object in which a welding bead formed by melting and solidifying a filler metal is repeatedly deposited based on a predetermined trajectory plan, the apparatus comprising:

a model setting unit configured to set an observation model obtained based on measurement information collected from at least one or more measurement instruments and a state transition model indicating a state transition of a shape index of the additively manufactured object extracted from the trajectory plan;
a physical quantity extraction unit configured to extract an observation physical quantity of the shape index from the observation model and extract a state physical quantity of the shape index from the state transition model;
an integration processing unit configured to obtain a state transition estimation value of the shape index by integrating the observation physical quantity and the state physical quantity; and
a control condition update unit configured to update a formation condition of the welding bead determined by the trajectory plan according to the state transition estimation value.

16. A control assistance device that assists control of the manufacturing apparatus of an additively manufactured object according to claim 15, wherein:

the observation model includes point cloud data that is collected from a sensor measuring a shape index of the additively manufactured object, and that represents the measured shape index of the additively manufactured object;
the state transition model includes plan shape data representing the shape index of the additively manufactured object based on the trajectory plan;

the control assistance device includes:

a data acquisition unit configured to acquire the point cloud data from the observation model and acquire the plan shape data from the state transition model;

an arithmetic unit configured to divide the acquired point cloud data into a plurality of unit sections, divide the acquired plan shape data into regions corresponding to the unit sections, and calculate a difference value between the point cloud data and the plan shape data for each of the unit sections;

an extraction unit configured to extract a unit section in which the difference value is larger than a predetermined threshold value from the plurality of unit sections; and

an information output unit configured to output information on the extracted unit section and the difference value corresponding to the unit section.

17. The control assistance device according to claim 16, further comprising a display unit configured to display output information from the information output unit.

18. The control assistance device according to claim 16, wherein
the arithmetic unit converts a coordinate system of the point cloud data into a drive coordinate system of the manufacturing apparatus of an additively manufactured object.

19. A program causing a computer to execute a manufacturing procedure of an additively manufactured object in which a welding bead formed by melting and solidifying a filler metal by a building device is repeatedly deposited based on a predetermined trajectory plan, the program causing the computer to implement:

a function of setting an observation model obtained based on measurement information collected from at least one or more measurement instruments provided in the building device and a state transition model indicating a state transition of a shape index of the additively manufactured object extracted from the trajectory plan;

a function of extracting an observation physical quantity of the shape index from the observation model and extracting a state physical quantity of the shape index from the state transition model;

a function of obtaining a state transition estimation value of the shape index by integrating the observation physical quantity and the state physical quantity; and

a function of updating a formation condition of the welding bead determined by the trajectory plan according to the state transition estimation value.

20. A program causing a computer to execute a manufacturing procedure of an additively manufactured object in which a welding bead formed by melting and solidifying a filler metal by a building device is repeatedly deposited based on a predetermined trajectory plan, the program causing the computer to implement:

a function of setting an observation model including point cloud data that is collected from a sensor measuring a shape index of the additively manufactured object, and that represents the measured shape index of the additively manufactured object and a state transition model including plan shape data representing the shape index of the additively manufactured object based on the trajectory plan and indicating a state transition of the shape index;

a function of acquiring the point cloud data from the observation model and acquiring the plan shape data from the state transition model;

a function of dividing the acquired point cloud data into a plurality of unit sections, dividing the plan shape data into regions corresponding to the unit sections, and calculating a difference value between the point cloud data and the plan shape data for each of the unit sections; and

a function of outputting information on the calculated unit section and the difference value corresponding to the unit section.

FIG. 1

*FIG. 2*

EP 4 450 198 A1

CONTROL UNIT

PROCESSOR ——— 31

35

STORAGE UNIT

MEMORY ——— 33

37 —— INPUT-OUTPUT INTERFACE

TRAJECTORY PLANNING UNIT ——— 39

MODEL SETTING UNIT ——— 41

PHYSICAL QUANTITY EXTRACTION UNIT ——— 43

INTEGRATION PROCESSING UNIT ——— 45

CONTROL CONDITION UPDATE UNIT ——— 47

25 —— MEASUREMENT INSTRUMENT

21 —— FILLER METAL SUPPLY UNIT

19 —— ROBOT DRIVE UNIT

23 —— WELDING POWER SUPPLY UNIT

——— 13

*FIG. 3*

FIG. 4

# FIG. 5

○ : MEASURABLE
△ : DECREASE IN ACCURACY
× : UNMEASURABLE

WD

PS2

R

LASER : ×
CAMERA : ○ / ×
CURRENT VOLTAGE : △

P2

LASER : ○
CAMERA : ○
CURRENT VOLTAGE : ○

P1

LASER : ×
CAMERA : △ / ×
CURRENT VOLTAGE : ○

P3

25

15

25

15

PS1

27

P0

WD

## FIG. 6

```
            START
              │
              ▼
      ┌─────────────────┐
      │   DETERMINE     │── S1
      │ TRAJECTORY PLAN │
      └─────────────────┘
              │
  ┌──────────►│
  │           ▼
  │   ┌──────────────────────────┐
  │   │ DETERMINE STATE TRANSITION│── S2
  │   │ MODEL AND OBSERVATION MODEL│
  │   └──────────────────────────┘
  │           │
  │           ▼
  │     ┌──────────────┐
  │     │ START BUILDING│── S3
  │     └──────────────┘
  │           │
  │           ▼
  │   ┌──────────────────────────┐
  │   │ EXTRACT PHYSICAL QUANTITIES│
  │   │ FROM STATE TRANSITION MODEL│── S4
  │   │   AND OBSERVATION MODEL    │
  │   └──────────────────────────┘
  │           │
  │           ▼
  │   ┌──────────────────────────┐
  │   │  OBTAIN STATE TRANSITION  │
  │   │ ESTIMATION VALUE OF SHAPE │
  │   │ INDEX BY INTEGRATING PHYSICAL│── S5
  │   │  QUANTITY OF EACH MODEL   │
  │   └──────────────────────────┘
  │           │
  │           ▼
  │   ┌──────────────────────────┐
  │   │  UPDATE TRAJECTORY PLAN   │
  │   │    ACCORDING TO STATE     │── S6
  │   │ TRANSITION ESTIMATION VALUE│
  │   └──────────────────────────┘
  │           │
  │           ▼
  │         ◇ IS BUILDING END? ◇── S7
  └── NO ────◇                  ◇
              │ YES
              ▼
            END
```

FIG. 7

FIG. 8A

FIG. 8B

EP 4 450 198 A1

*FIG. 9*

FIG. 10A

WD

FIG. 10B

WD

*FIG. 11*

```
           ( START )
              │
              ▼
   ┌──────────────────────┐
   │   FORM BEAD LAYER     │──── S11
   └──────────────────────┘
              │
              ▼
   ┌──────────────────────────┐
   │ MEASURE HEIGHT OF BEAD   │
   │ LAYER AND OBTAIN POINT   │──── S12
   │      CLOUD DATA          │
   └──────────────────────────┘
              │
              ▼
   ┌──────────────────────────┐
   │ CALCULATE DEVIATION      │
   │ AMOUNT BETWEEN HEIGHT    │──── S13
   │ OF EACH UNIT SECTION     │
   │ AND PLANNED HEIGHT       │
   └──────────────────────────┘
              │
              ▼
   ┌──────────────────────────┐
   │ EXTRACT UNIT SECTION IN  │
   │ WHICH DEVIATION AMOUNT   │──── S14
   │ IS LARGER THAN           │
   │ THRESHOLD VALUE          │
   └──────────────────────────┘
              │
              ▼
   ┌──────────────────────────┐
   │ UPDATE BEAD FORMATION    │
   │ CONDITIONS OF EXTRACTED  │──── S15
   │ UNIT SECTION             │
   └──────────────────────────┘
              │
              ▼
           (  END  )
```

# FIG. 12

| | PS1 | PS2 | PS3 | PS4 | PS5 |
|---|---|---|---|---|---|
| UC → | +1.0 | -1.5 | +2.0 | +0.5 | -1.0 |
| | (-2.0) | +2.5 | +1.0 | +1.5 | +1.0 |
| | +1.0 | +1.5 | -1.0 | 1.3 | +1.0 |
| | +1.0 | +0.3 | +0.0 | +1.4 | -1.1 |
| | +1.2 | +1.5 | +1.0 | +1.5 | +1.0 |
| | -0.8 | +0.0 | -0.4 | +0.3 | -1.0 |
| | +1.0 | +2.2 | +1.0 | -1.5 | +1.2 |

DEVIATION VALUE

DEVIATION AMOUNT MAP

Pk

EP 4 450 198 A1

FIG. 13

FIG. 14

200

17

15

25A

W

73

70

71

B

60

61

63
67
65

X
Y

FIG. 15

*FIG. 16*

FIG. 17

CONTROL ASSISTANCE DEVICE — 300

POINT CLOUD DATA AND
DEPOSIT PLANNING DATA

DATA ACQUISITION
UNIT — 81

ARITHMETIC UNIT — 83

EXTRACTION UNIT — 85

INFORMATION ON
EXTRACTION RESULT

INFORMATION
OUTPUT UNIT — 87

DISPLAY
INFORMATION

DISPLAY UNIT — 89

EP 4 450 198 A1

*FIG. 18*

15

EXCESSIVE

B

HEIGHT IS
INSUFFICIENT

27

FIG. 19A

(BASE METAL)

ERROR  0                                        POSITION

FIG. 19B

(FIRST LAYER)

ERROR  0                                        POSITION

FIG. 19C

(SECOND LAYER)

ERROR  0                                        POSITION

*FIG. 20A*

(FIRST LAYER)

TRAVEL
SPEED

POSITION

*FIG. 20B*

(SECOND LAYER)

TRAVEL
SPEED

POSITION

*FIG. 20C*

(THIRD LAYER)

TRAVEL
SPEED

POSITION

## FIG. 21

## FIG. 22

## INTERNATIONAL SEARCH REPORT

| International application No. |
| --- |
| **PCT/JP2022/046977** |

| A. | CLASSIFICATION OF SUBJECT MATTER |
| --- | --- |

*B23K 9/04*(2006.01)i; *B23K 9/032*(2006.01)i; *B23K 9/14*(2006.01)i; *B23K 31/00*(2006.01)i; *B33Y 10/00*(2015.01)i; *B33Y 30/00*(2015.01)i; *B33Y 50/00*(2015.01)i

FI: B23K9/04 G; B23K9/04 Z; B23K9/032 Z; B23K31/00 Z; B33Y10/00; B33Y30/00; B33Y50/00; B23K9/14 Z; B23K31/00 N

According to International Patent Classification (IPC) or to both national classification and IPC

| B. | FIELDS SEARCHED |
| --- | --- |

Minimum documentation searched (classification system followed by classification symbols)

B23K9/04; B23K9/032; B23K9/14; B23K31/00; B33Y10/00; B33Y30/00; B33Y50/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 6797324 B1 (KOBE STEEL LTD) 09 December 2020 (2020-12-09) paragraphs [0012]-[0044], fig. 1-6 | 1-2, 11, 14-15, 19-20 |
| Y | | 3-4, 9 |
| A | | 5-8, 10, 12-13, 16-18 |
| Y | JP 2020-192752 A (KOBE STEEL LTD) 03 December 2020 (2020-12-03) paragraph [0088] | 3-4, 9 |
| A | | 1-2, 5-8, 10-20 |
| Y | JP 2015-160217 A (UNIV TOKYO AGRICULTURE) 07 September 2015 (2015-09-07) paragraphs [0024]-[0027] | 9 |
| A | | 1-8, 10-20 |
| A | JP 6989059 B1 (MITSUBISHI ELECTRIC CORP) 05 January 2022 (2022-01-05) entire text, all drawings | 1-20 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 March 2023** | **20 March 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

<table>
<tr><td colspan="2">International application No.</td></tr>
<tr><td colspan="2">**PCT/JP2022/046977**</td></tr>
</table>

**C.    DOCUMENTS CONSIDERED TO BE RELEVANT**

| Category* | Citation of document, with indication, where appropriate, of the relevant passages | Relevant to claim No. |
|-----------|-----------------------------------------------------------------------------------|-----------------------|
| A | JP 2021-138030 A (KOBE STEEL LTD) 16 September 2021 (2021-09-16)<br>entire text, all drawings | 1-20 |

Form PCT/ISA/210 (second sheet) (January 2015)

**INTERNATIONAL SEARCH REPORT**
Information on patent family members

International application No.

**PCT/JP2022/046977**

| Patent document cited in search report | | | Publication date (day/month/year) | Patent family member(s) | Publication date (day/month/year) |
|---|---|---|---|---|---|
| JP | 6797324 | B1 | 09 December 2020 | (Family: none) | |
| JP | 2020-192752 | A | 03 December 2020 | (Family: none) | |
| JP | 2015-160217 | A | 07 September 2015 | (Family: none) | |
| JP | 6989059 | B1 | 05 January 2022 | (Family: none) | |
| JP | 2021-138030 | A | 16 September 2021 | (Family: none) | |

Form PCT/ISA/210 (patent family annex) (January 2015)

**EP 4 450 198 A1**

**Patent documents cited in the description**

- JP 6576593 B
- JP 2022006772 A
- JP 2022152600 A